# EUROPEAN PATENT SPECIFICATION

(11) **EP 1 407 565 B1**
(45) Date of publication and mention of the grant of the patent: **28.09.2005**
(21) Application number: 02751596.4
(22) Date of filing: 18.07.2002
(51) Int. Cl.: H04J 1/00

(54) **METHOD AND APPARATUS FOR CONVERTING DATA PACKETS BETWEEN A HIGHER BANDWIDTH NETWORK AND LOWER BANDWIDTH NETWORK**
VERFAHREN UND VORRICHTUNG ZUR UMSETZUNG VON DATENPAKETEN ZWISCHEN EINEM NETZWERK MIT HOHER BANDBREITE UND EINEM NETZWERK MIT NIEDRIGER BANDBREITE
PROCEDE ET APPAREIL POUR CONVERTIR DES PAQUETS DE DONNEES ENTRE UN RESEAU A BANDE LARGE ET UN RESEAU PRESENTANT UNE LARGEUR DE BANDE INFERIEURE

(30) Priority: 19.07.2001 US 306299 P; 19.07.2001 US 907748
(43) Date of publication of application: 14.04.2004
(73) Proprietor: ECI TELECOM LTD., Petach-Tikva 49517 (IL)
(72) Inventor: JORDAN, Reuven, D., 47203 Ramat HaSharon (IL)
(74) Representative: Curell Aguilà, Marcelino
(86) International application number: PCT/IL2002/000598
(87) International publication number: WO 2003/009502

(56) References cited:
- EP-A- 1 091 513
- EP-A- 1 124 355
- WO-A-01/08356
- US-A- 5 568 486
- US-A1- 2003 016 690
- US-A1- 2003 016 697

## Description

### Field of the Invention

This invention relates, in general, to a method and apparatus for converting a data packet for transmission and reception in a communication network, and in particular to a method and apparatus for converting a data packet received from a first broadband telecommunications network to a second data packet configured for transmission on a payload network having a narrower bandwidth than the first broadband network; and, after transmission on the payload network, reconverting the second data packet back to a format of the first broadband network. In a particular embodiment, this invention relates to a method and apparatus for converting a data packet received from a 1 Gb Ethernet network to a format for transmission on an OCnc (n=1, 3, 12) payload network; and for reconverting the transmitted OCnc data packet back to a format of the 1 Gb Ethernet data packet.

The application is also directed to a method and apparatus wherein the OCnc payload network has a plurality of parallel channels comprising a primary high priority channel and at least one secondary, lower priority channel. In contrast, Applicant's related application entitled Method and Apparatus for Converting Data Packets between a Higher Bandwidth Network and a Lower Bandwidth Network is directed to a method and apparatus wherein the OCnc payload network has only a single channel.

### Background of the Invention

Ethernet is basically a broadcast protocol. Its main advantage is its simplicity. This allows Ethernet to be implemented with less costly hardware and software. Ethernet has become a common protocol for local area networks. For purposes of this application, the term "Ethernet" includes the entire class of Carrier Sense Multiple Access/Collision Detection (CSMA/CD) protocols covered by the family of computer industry standards known variously as IEEE-802.3 and ISO 8802/3. This includes but is not limited to 1-Mb Ethernet, known as "StarLAN", 10-Mb Ethernet, 100-Mb Ethernet, known as "Fast Ethernet", 1-Gb Ethernet and any future CSMA/CD protocols at any other data rates.

Ethernet, as with other network protocols, transmits data across a packet switched network. In packet switched networks data is divided into small pieces called packets that can be multiplexed onto high capacity inter-machine connections. Packet switching is used by virtually all computer interconnections because of its efficiency in data transmissions. Packet switched networks use bandwidth on a circuit as needed, allowing other transmissions to pass through the lines in the interim.

A packet is a block of data together with appropriate identification information necessary for routing and delivery to its destination. The packet includes a source address, a destination address, the data being transmitted, and a series of data integrity bits commonly referred to as a cyclical redundancy check or CRC. The source address identifies a device that originated the packet and the destination address identifies a device to which the packet is to be transmitted over the network.

As is known in the art transmission of a data packet on a packet switched network results in s transmission burst entails synchronously transmitting all bytes which make up the data packet. A data packet being transmitted on a 1 Gb Ethernet network has a capacity of a certain maximum number of bytes corresponding to the network bandwidth capacity, but usually a fewer number of bytes are transmitted.

In simple point-to-point networks having only an origin node and a destination node, idle bytes can be inserted between packets. In more complex multi-node networks a link between nodes "i" and "j" is frequently left silent when there is nothing to be transmitted from node "i" to node "j".

An Ethernet packet size typically ranges from 40 to about 1500 bytes. A transmission rate of data communicated on the 1 Gb Ethernet network is typically less than about 600 Mbps; and is frequently not delay sensitive. Moreover, 1 Gb Ethernet packet transmissions are generally "bursty" - that is, they comprise a series of short, high density burst with idle bytes or silent periods dispersed between the burst.

A main drawback with conventional Ethernet is that there are significant limitations on the physical distance that the network can cover. Gigabyte Ethernet networks as with other forms of Ethernet are typically found in relatively short distance Local Area Networks (LANs) and Metropolitan Area Networks (MANs).

Long distance networks such as Wide Area Networks (WANs) frequently comprise Switched Optical Networks (SONETs) and frequently utilize conventional communications protocols such as OC12, OC3, or OC1, hereinafter collectively referred to as OCnc. In SONETs there is no particular packet size requirement.

Where it is desired to communicate the Ethernet data packet from the LAN or MAN in a first location across the long distance network to the LAN or MAN in a second location, it is necessary to convert the Ethernet packet to a format suitable for transmission across the long distance network. Encapsulation protocols have been developed to allow Ethernet packets to be transmitted over longer distances. In such protocols, the entire Ethernet packet is placed within another type of packet which has its own header and includes additional addressing information, protocol information, etc., and which conforms to a format of the long distance network.

Thus, in encapsulation techniques the size of an encapsulating packet must be larger than a size of an encapsulated packet.

Currently known OC12 SONET/WAN systems have a bandwidth capacity of about 622 Mbps. On the other hand, 1 Gb Ethernet packets are, by definition, one gigabyte. Thus, in order to communicate a 1 Gb Ethernet packet on an OC12 network a technique other than simple data encapsulation is required.

The prior art includes many attempts to solve the problem of transmitting a large packet through an intervening smaller packet carrying network. This prior art includes the following U.S. patents:

U.S. Patent No. 6,148,010 to Sutton et al. discloses a method and apparatus for distributing and consolidating data packets onto multiple network interfaces using frame-based inverse multiplexing to parse high speed data into frames for placement onto lower speed networks.

U.S. Patent No. 6,111,897 to Moon discloses a multiplexing/demultiplexing apparatus in a digital communication system with a variable frame structure and a method of controlling the same. The apparatus comprises a first FIFO unit for buffering data inputted at a fixed speed, a first write controller for outputting a first write address to the first FIFO unit in response to a first data input clock, a first read controller for outputting a first read address to the first FIFO unit in response to a first data output clock, a stuff/delete determination unit for generating stuff and delete indication signals, a multiplexer for multiplexing output data from the first FIFO unit to output frame data, a demultiplexer for demultiplexing the frame data from the multiplexer, a second write controller for generating a second write address in response to a write enable signal from the demultiplexer and a second data output clock, second read controller for generating a second read address in response to a second data input clock, a clock adjustment unit for outputting the second data input clock to the second read controller, and a second FIFO unit for storing output data from the demultiplexer in response to the second write address from the second write controller and outputting the stored data in response to the second read address from the second read controller.

U.S. Patent Nos. 6,094,439 and 6,081,523 to Krishna et al., disclose a Gigabit network node having a media access controller outputting packet data at Gigabit rates using multiple 100 MB/s physical layer links coupled to a physical interface having a data router to enable implementation of a Gigabit network using low cost data links. At least a portion of the packet data is selectively transmitted in a modified reconciliation layer onto the plurality of physical layer links.

U.S. Patent No. 6,034,974 to Matsuoka et al. discloses a channel-selection-type demultiplexing circuit capable of demultiplexing signals to a desired output port during bit demultiplexing, instead of simply demultiplexing the bits as in conventional devices; and which performs bit demultiplexing based on a frequency division clock after selecting the bit signals to be demultiplexed to the desired output port from the N-channel multiplexed signal stream based on channel selection information.

U.S. Patent No. 6,002,692 to Wills, discloses an apparatus for interfacing a high speed broad bandwidth communication network to a communication fabric having a bandwidth which is a fraction of the high speed broad bandwidth network; and where the network and the fabric have different data packet formats. Data packets in a format of the high speed broad bandwidth network are converted to data packets in a format of the communications fabric and transmitted there-through. At a terminal end of the fabric the data packets in the format of the fabric are re-converted back to the format of the high speed broad bandwidth network.

U.S. Patent No. 5,970,067 to Sathe et al. discloses an asynchronous transfer mode (ATM) inverse multiplexed communication system wherein a series of communication cells are multiplexed over a set of communication links. Each communication cell includes a framing bit of a predetermined framing bit stream for each communication link and a control channel bit of a control message for each communication link. Inbound communication cells from each communication link are aligned according to the corresponding framing bit stream. The control message specifies an ordered list of logical identifiers to indicate a multiplexed sequence of transfer of the communication cells over the communication links.

U.S. Patent No. 5,751,723 to Vanden Heuvel et al., discloses an apparatus and method for recovery of bandwidth overhead in a packetized network wherein a secondary information is interleaved into vacant or idle bytes in a data packet having a primary information.

U.S. Patent No. 5,687,176 to Wisniewski et al., discloses an apparatus and method for zero-byte substitution in a channel unit or line card coupling a digital subscriber line to a digital transmission facility. An occurrence of an all-zero data byte causes a corresponding zero byte indicator flag to be produced, and also causes the all-zero byte to be replaced by the preceding non-zero data byte rather than by a prescribed or predetermined data byte. On the receive side, the occurrence of a repeated data byte is detected and causes the current data byte to be replaced by an all-zero byte to restore the original data.

U.S. Patent No. 5,680,400 to York, discloses a high speed data transfer mechanism for transferring files from a transmission host across a data link to a receiver host. An input data stream is split into N separate substreams by packaging data into packets, which may be of different sizes. As data is packetized, each packet is sent and presented to a separate data transmitter. Data is sent to the array of transmitter in round-robin fashion such that the data is first presented to the first transmitter, then to the second transmitter, and so on until each transmitter has been sent a packet, then the first transmitter is sent another, and so on, until all data packets have been sent to a transmitter. A receiving side of the mechanism then initializes as many receivers as needed, or as many data receive substreams as are required using as many receivers as are available. A substream reassembly unit reassembles data packets into a final output stream.

U.S. Patent No. 5,583,863 to Darr, Jr. et al., discloses an arrangement for transporting digital broadband data output in Asynchronous Transfer Mode (ATM) cell streams from a plurality of video information service providers (VIPs) to a plurality of subscribers. A digital broadband network is adapted to receive a plurality of ATM streams from VIPs via optical fibers having a predetermined capacity. A plurality of receivers corresponding to the optical fibers output ATM cells from the optical fibers having active ATM cell streams to an ATM edge device having input ports corresponding to the predetermined capacity of the optical fibers. The ATM edge device grooms the ATM cells by rejecting unauthorized cells and idle cells that do not carry information, and maps the remaining ATM cells to output ports having a lower predetermined capacity than the plurality of optical fibers coupled to the receivers. The mapped ATM cells are assigned translated VPI/VCI identifiers and are combined onto common signal paths for transport via optical fibers.

U.S. Patent No. 5,570,356 to Finney et al., discloses a data communication system includes a phase splitting circuit to split a high speed parallel data word into a number of individual parallel data bytes, a byte multiplexor for each of the phases of a phase splitting circuit, encoding and serialization circuits for converting each byte to an encoded form suitable for serial transmission, transmitting each encoded byte across one of a number of serial transmission links to a receiving device where the data is deserialized and decoded to recover the original byte which is then synchronized by a byte synchronization circuit. The byte synchronization circuits are then coupled to a word synchronization circuit where the original high bandwidth data word is recovered and transmitted on an internal high speed parallel bus within the receiving device.

U.S. Patent No. 5,544,161 to Bigham et al., discloses a network having an architecture that distributes services over a greater serving area. A broadcast consolidation section receives broadband data from a plurality of information providers. The broadcast consolidation section combines the data streams from different information providers and outputs a consolidated signal onto a transport ring. The broadcast ring supplies the consolidated broadcast edit to a plurality of network hubs, each of which downloads the consolidated broadcast data, converts the data and transmits it by optical fiber to a plurality of local access nodes. Each local access node combines data with downstream traffic supplied by a backbone subnetwork. The combined signals are output from the local access nodes. Demultiplexers in the network hubs and the local access nodes perform processing on received data streams, assign identification values, and output on broadband channels or narrowband channels.

U.S. Patent No. 5,371,547 to Siracusa et al., discloses an apparatus for excising specific data from a data stream to reduce its transmission bandwidth; and for re-inserting the excised data to regenerate the original data stream.

U.S. Patent No. 5,293,378 to Shimizu, discloses a packet transmission system wherein a packet can be transmitted at a high rate over a long transmission distance. Under the control of a transmission controller, a separating circuit divides a packet of a packet signal into six payloads to make six transmission frames and adds a start delimiter and an end delimiter to the first and last transmission frames, and four transmitters send out the six transmission frames in accordance with sequence numbers at a rate at which the signal can be transmitted by way of time division transmission lines. Under the control of a reception controller, four receivers receive the transmission frames, and a restoring circuit assembles the transmission frames back into the original packet signal in accordance with the sequence numbers and the delimiter information.

U.S. Patent No. 5,020,058 to Holden et al., discloses a data communication system having a repetitive pattern packet suppression technique which suppresses transmission of entire packets in a data stream when a repeating pattern has been established in the previous packet and is then found to repeat throughout the following packets. The resulting hole in the data stream is filled at a destination end with the last pattern from the previously received packet.

Other U.S. patents of interest include: 6,157,637 to Galand et al.; 6,154,462 to Coden 6,088,827 to Rao; 6,088,369 to Dabecki et al.; 6,014,708 to KJish; 5.999,525 to Krishnaswamy; and 4,796,254 to van Baardwijk et al.

WO 01/08356 A1 discloses an interfacing apparatus and method for adapting Ethernet directly to physical channel, which encapsulates MAC frames into SDH/SONET SPE/VC using LAPS (link access procedure for SDH). The LAPS encapsulation consists of the start Flag Sequence, address field (SAPI, Service Access Point Identifier), control field (0x03), Information field (Ipv4, Ipv6, or PPP protocol data unit), FCS (Frame check sequence) and the ending Flag Sequence. The Flag Sequence (0x7E) identifies the beginning/end of a LAPS frame. That solution can be used to provide Ethernet interface in telecom SDH/SONET transmission device, interfacing units used in high speed application, e.g. Gigabit applications, etc.

EP 1 124 355 A2 (prior art in the meaning of Article 54(3) EPC) discloses an Ethernet mapping that enables high speed Ethernet data streams having a data rate of 10Gb/s to be transported across a synchronous packet switched network fabric having a standard SONET OC-192 line rate of 9.953280 Gbaud. The 10Gb/s Ethernet data stream is compressed by removing interframe gaps between successive MAC frames to produce a compressed data stream, which is then mapped to a synchronous container. The synchronous container is then launched across the synchronous packet switched network fabric at a standard SONET OC-192 line rate of 9.953280 Gbaud. The synchronous container is preferably provided as a stripped STS-192c frame having only A1 and A2 octets of the Transport Overhead (TOH). At a receiving interface, the compressed data stream is extracted from received synchronous containers and decompressed, by insertion of interframe gaps between successive MAC frames, to generate a recovered 10Gb/s Ethernet data stream. The starting bit of each successive MAC frame can be identified by examination of the length field of the immediately previous MAC frame.

In spite of the numerous existing or published patents, there remains a need for a system that can reliably, economically and efficiently take a data packet for a larger bandwidth network and compress it to a size such that it can be transmitted on a narrower bandwidth, in particular, to compress it to a size such that it can be transmitted on a first channel of a narrower bandwidth payload network; and, where necessary, supplement the bandwidth capacity of the first channel of the narrower bandwidth payload network by providing, on demand, access to payload capacity of a second channel of the narrower bandwidth payload network.

### Summary of the Invention

Accordingly, one of the advantages of the present invention is that it can efficiently communicate a data packet for a larger bandwidth network across a. smaller bandwidth network. In a particular embodiment it is therefore desirable to convert the data packet of the larger bandwidth network to the format of the smaller bandwidth network packet rather than simply encapsulate. In a particular embodiment it is therefore desirable to convert the data packet of the larger bandwidth network to a format of the smaller bandwidth network packet rather than encapsulate.

Another object of the present invention is to provide an apparatus and method for converting a first conventional data packet received from a first broadband network to a second conventional data packet suitable for transmitting on a second broadband network, wherein a bandwidth of the second broadband network is less than a bandwidth of the first broadband network.

It is therefore an object of the present invention to provide an apparatus and method for converting a conventional data packet received from a first broadband network to a conventional data packet suitable for transmitting on a second broadband network, wherein a bandwidth of the second broadband network is less than a bandwidth of the first broadband network.

It is a further object of the present invention to provide the apparatus and method for converting the conventional data packet received from the first broadband network to the conventional data packet suitable for transmitting on the narrower bandwidth second broadband network, with no loss of data content.

It is a further object of the present invention to provide the apparatus and method for converting a conventional data packet received from a 1Gb Ethernet network to a conventional data packet suitable for transmitting on a conventional standard bandwidth SONET such as an OCnc (n=1, 3, 12) payload network with no loss of data content.

A method accomplishing the foregoing objectives includes receiving a series of data packet bursts from a broadband network with idle bytes interposed between the bursts; removing the idle bytes to reduce a transmitted bit stream, framing the packets in accordance with a conventional protocol such as a General Frame Protocol (GFP) or Packet Over Sonet protocol (POS), and providing the framed data packets to said payload network.

It is an object of a specific embodiment of the present invention to provide the apparatus and method for converting the conventional series of bursty data packets received from a 1Gb Ethernet network, to the conventional data packets suitable for re-transmitting on an OC12 payload network. However, in order to successfully effectuate this conversion a large number of bytes (1 Gb minus 622 Mb) needs to be removed from the 1 Gb Ethernet data stream so that a size of the Ethernet valid payload can fit the OC12 bandwidth. Advantageously, a data content of the 1 Gb Ethernet stream is typically less than about 600 Mb, the remainder being idle bytes. Thus, removal of the idle bytes from the 1 Gb Ethernet stream can permit the Ethernet valid payload to fit the OC12 bandwidth without any loss of data content. In alternative specific embodiments the apparatus and method can be similarly adapted to an OC3 or an OC1 payload network. The apparatus and method of the present invention thus has general applicability to any OCnc (n=1, 3, 12) payload network.

Moreover, it is an object of the present invention to take advantage of the conventionally known bursty characteristic of Ethernet traffic, conventionally known to not be very delay sensitive, and to supply a SONET link with a bandwidth corresponding to an average valid data bandwidth of the Ethernet traffic, and therein to absorb the traffic bursts using a large buffer.

At a terminal end of the OC12 SONET/WAN the OC12 data packet can be restored to a format compatible with the 1 Gb Ethernet network.

The present invention includes a method and apparatus directed to a payload network having a plurality of parallel channels is described.

More particularly, in the embodiments of the instant application a method and apparatus directed to a payload network having at least two parallel channels is described. The payload network of the instant application has a first, high priority, dedicated channel allocated to transmission of the data packets from the 1 Gb Ethernet network; and at least one second, lower priority, non-dedicated channel whose payload capacity is reassigned to transmission of the data packets from the 1 Gb Ethernet network on an as-needed basis. Specifically, the non-dedicated lower priority channel's capacity is normally made available for transmission of any low-priority data requiring bandwidth capacity. However, in the event that the capacity of the primary high priority channel is at any time exhausted, capacity on the lower priority channel is diverted from serving the low priority data and made available to the high priority data of the 1 Gb Ethernet network; the low priority data then currently utilizing the lower priority channel being subject to delay and/or data loss.

It is an object of a specific embodiment of the present invention to provide the apparatus and method for converting the conventional series of bursty data packets received from a 1 Gb Ethernet network, to the conventional data packets suitable for re-transmitting on an OC12 payload network. However, in order to successfully effectuate this conversion a large number of bytes (1 Gb minus 622 Mb) needs to be removed from the 1 Gb Ethernet packet so that a size of the Ethernet packet can fit the OC12 bandwidth. Advantageously, a data content of the 1 Gb Ethernet stream is typically less than about 600 Mb, the remainder being idle bytes. Thus, removal of the idle bytes from the 1 Gb Ethernet stream can permit the Ethernet packet size to fit the OC12 bandwidth without any loss of data content.

Moreover, it is an object of the present invention to take advantage of the conventionally known bursty characteristic of Ethernet traffic, conventionally known to not be very delay sensitive, and to supply a SONET link with a bandwidth corresponding to an average valid data bandwidth of the Ethernet traffic, and therein to absorb the traffic bursts using a large buffer.

At a terminal end of the OC12 SONET/WAN the OC12 data packet can be restored to a format compatible with the 1 Gb Ethernet network.

It is a further object of the present invention to provide the apparatus and method for converting a series of conventional data packets received from the 1 Gb Ethernet network to a series of conventional data packets suitable for selectively transmitting on one or another of a pair of channels of a multi-channel OC12 payload network with no loss of data content. More particularly, it is an object of the present invention to provide the method and apparatus for converting a series of conventional data packets received from the 1 Gb Ethernet network to a series of conventional data packets suitable for transmitting on a dedicated high priority primary channel of an OC12 payload network, while a secondary, lower priority channel of the OC12 payload network is made available for transmitting lower priority data packets; and, on demand, in the event capacity at any time becomes unavailable or exhausted on the dedicated primary channel, to divert capacity on the secondary channel from the low priority data to the high priority data without loss of any high-priority data with the low priority data then currently utilizing the lower priority channel being subject to delay and/or data loss.

It is yet a further object of the present invention to provide the apparatus and method for converting the series of conventional data packets received from one or another of the pair of channels of the multi-channel OC12 payload network, to a series of conventional data packet suitable for re-transmitting on the 1 Gb Ethernet network.

These and other objects, features, and advantages of the invention will be better understood by those skilled in the art by reference to the following detailed description taken together with the following drawings in which like numerals identify like components throughout the several views.

### Brief Description of the Drawings

Fig. 1 is a schematic block diagram of an apparatus according to one embodiments relating to the present invention that can convert and format a 1 Gb Ethernet data packet for transmission on an OC12 payload network.
Fig. 2 is a schematic block diagram of an apparatus according to a specific embodiment relating to the present invention that can reconvert and reformat the data packet transmitted on the OC12 payload of Fig. 1 to a 1 Gb Ethernet packet.
Fig. 3 is a schematic of a typical circuit of a control logic block of Fig. 1.
Fig. 4 is a truth table of the operation the control logic block circuit of Fig. 3
Fig. 5 is a schematic block diagram of an apparatus according to one embodiment of the present invention that can convert, format and demultiplex a 1 Gb Ethernet data packet for transmission on a multi-channel OC12 payload.
Fig. 6 is a schematic block diagram of an apparatus according to a specific embodiment of the present invention that can reconvert, reformat and remultiplex the data packets transmitted on the multi-channel OC12 payload network of Fig. 1 back to a 1 Gb Ethernet packet.

### Detailed Description of the Preferred Embodiment

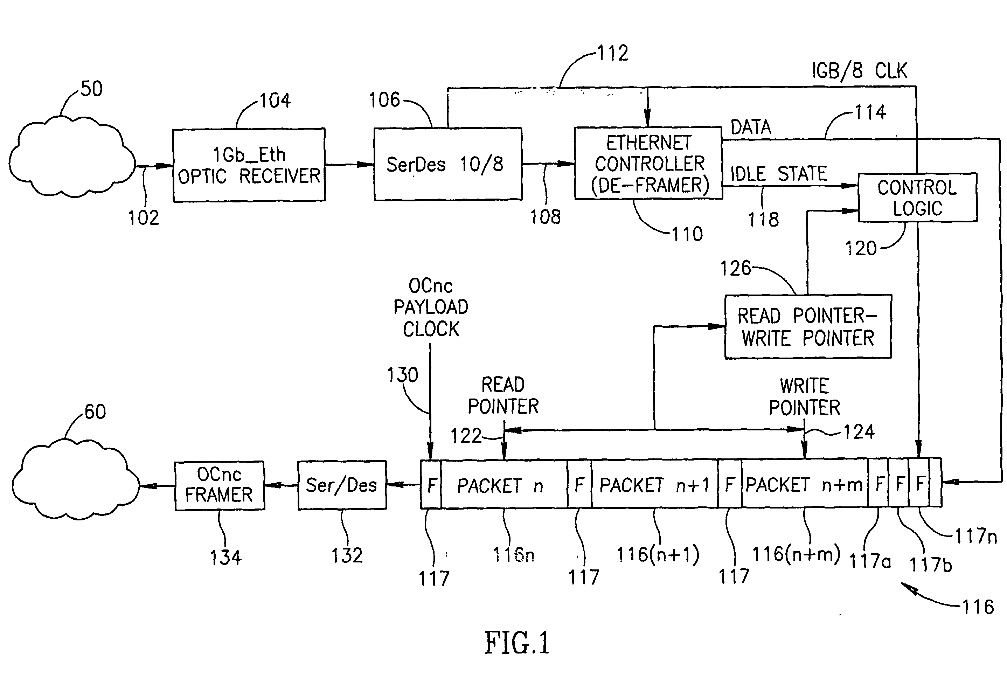

With reference to the figures in which like numerals represent like elements or components throughout the several views, and in particular with reference to Fig. 1, there is shown a schematic block diagram of an embodiment of an apparatus relating to the present invention. The apparatus is for converting a bursty sequence of conventional 1 Gb Ethernet data packets (not shown) of a 1 Gb Ethernet network, schematically shown at 50, to a conventional OC12 data packet (not shown) of an OC12 payload network, schematically shown at 60.

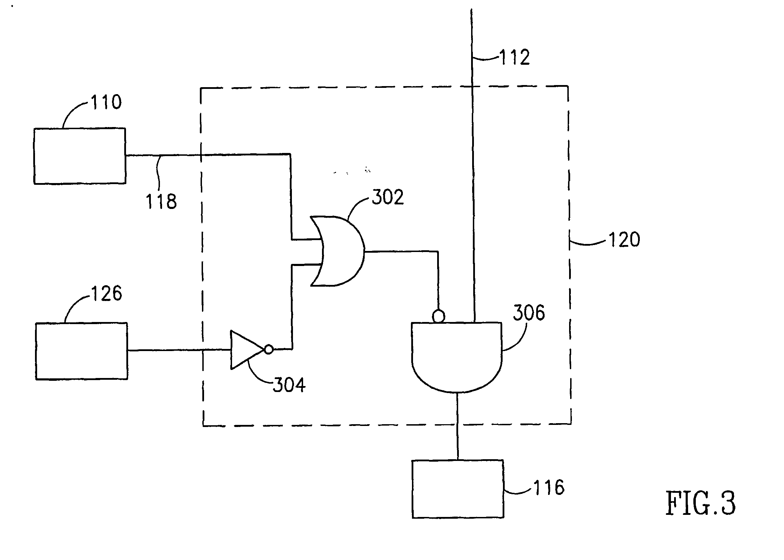

An Ethernet optical fiber 102 is connected at one end to Ethernet network 50. Another end of Ethernet optical fiber 102 is connected to an input of a conventional 1 Gb Ethernet optical receiver 104. An output of optical receiver 104 is connected to an input of a conventional serializer-deserializer 106. A first output of serializer-deserializer 106 is connected by a link 108 to an input of a conventional Ethernet Controller or Deframer 110. A second output of serializer-deserializer 106 is connected to a link 112 which is connected to a second input of Ethernet Controller 110. An output of Ethernet Controller 110 is connected by a link 114 to a serial input port of an input buffer 116. A second output of Ethernet Controller 110 is connected by a link 118 to a control logic block 120. An example of a circuit of control logic block 120 is shown in Fig. 3.

Input Buffer 116 has a sequential arrangement of a plurality of buffer sections 116ₙ, 116ₙ₊₁,...,116ₙ₊ₘ. Sections 116ₙ, 116ₙ₊₁,...,116ₙ₊ₘ can be separated by a singular flag 117; or a plurality of flags such as 117ₐ, 117_{b},...117ₙ. A read pointer 122 of section 116ₙ and a write pointer 124 of section 116ₙ₊ₘ are connected to an input of a conventional arithmetic difference register 126. An output of register 126 is connected to a second input of control logic block 120. A third input of control logic block 120 is connected to link 112. An output of control logic block 120 is connected to input buffer 116 at an input end thereof. An OCnc payload clock signal 130 is connected to input buffer 116 at an output end thereof. An output of input buffer 116 is connected to an input of a conventional serializer-deserializer 132. An output of serializer-deserializer 132 is connected to an input of a conventional OCnc framer 134. An output of OCnc framer 134 is connected to OCnc payload network 60.

Serializer-deserializer 106 converts each byte in the Ethernet data packet to a corresponding serial data stream (not shown) in a conventional manner as is known in the art. U.S. Patent No. 4,486,739 to Franaszek et al. discloses a method and apparatus for converting a conventional 8-bit parallel data byte into 10 binary digits; and U.S. Patent Nos. 3,334,181 to Bartlett et al. and 4,398,225 to Cornaby et al. disclose an apparatus and method for parallel to serial conversion; and serial to parallel conversion, respectively. Thus, the serial data stream comprises a sequential arrangement of data in a one-to-one correspondence with the bytes in the Ethernet data packet.

Serializer-deserializer 106 communicates the bytes in the serial data stream by link 108 to Ethernet Controller 110. Link 108 can be a conventional fiber optic cable, but can also be a conventional wire connector. Serializer-deserializer 106 also provides a first clock signal to link 112 during a time duration of the serial data stream. The first clock signal corresponds to a timing of Ethernet network 50; and is strobed in synchronization with the serial data stream outputted by serializer-deserializer 106. The first clock signal has a logical Ahigh@ value when a byte is transmitted in the serial data stream; and is strobed to a logical Alow@ value during an inter-byte time slice between successive bytes.

Ethernet Controller 110 sequentially receives each byte in the serial data stream from link 108 and outputs each received byte on serial data link 114 in a same order as received. Ethernet controller 110 uses a conventional protocol such as a GFP protocol or a POS protocol to maintain a packetized structure of the outputted serial data stream.

Ethernet Controller 110 receives the first clock signal from link 112. During each logical Ahigh@ value strobe of the first clock signal, Ethernet Controller 110 receives a Anext in sequence@ byte in the serial data stream from link 108 corresponding to a next byte in the Ethernet data packet. The Anext in sequence@ byte thus becoming a Acurrent@ byte. Ethernet Controller 110 determines if the Acurrent@ byte is a non-idle byte, i.e., that it is part of a serial data stream corresponding to a burst Ethernet data packet; or if the Acurrent@ byte is an idle byte, i.e., it is part of an inter-packet space between successive packet bursts. Ethernet Controller 110 outputs a binary valued logical idle state signal on link 118 based on this determination.

Register 126 is a conventional arithmetic difference unit which determines a difference in a numeric value of read pointer 122 and write pointer 124 located at different sections of input buffer 116. Read pointer 122 designates the location where the serial data stream corresponding to an An@-th Ethernet data packet was previously serially stored in input buffer 116, and which is next in sequence to be serially written out from input buffer 116. Write pointer 124 designates the location in input buffer 116 where the serial data stream corresponding to an An+m@-th Ethernet data packet is next to be written into input buffer 116.

Register 126 provides a binary valued logical output to control logic block 120 depending on an arithmetic difference between a value of read pointer 122 and a value of write pointer 124. If the arithmetic difference indicates that space exists in buffer 116 in which additional data can be written, register 126 outputs a first binary value to control logic block 120. If the arithmetic difference indicates that no space exists in buffer 116 in .which additional data can be written, then a second binary value, different from the first binary value, is provided to control logic block 120.

Control logic block 120 combines the idle state signal on link 118 with the binary output from register 126 and provides a write enable output signal to input buffer 116.

Control logic block 120 follows the first clock signal on link 112 when the idle state signal indicates that the Acurrent@ byte on link 114 is not idle and the binary output from register 126 indicates that space exists in buffer 116 in which to write additional data. Control logic block therefore outputs a logical write-enable gate keeping signal to input buffer 116 that indicates that the Acurrent@ byte in the serial data stream provided from Ethernet Controller 110 on serial data link 114 is to be serially written into input buffer 116. During the inter-byte time slice between bytes in the serial data stream when the first clock signal is at a logical Alow@ value, control logic block 120 provides a write-disable gate keeping signal that indicates to input buffer 116 that no data is currently to be written.

When the idle state signal indicates that the "current@ byte is idle, the write-enable gate keeping signal from control logic block 120 will not be provided to input buffer 116 and the Acurrent@ byte will therefore not be written into buffer 116. similarly, if register 126 indicates that no space exists in buffer 116 in which to write additional data, the write-enable gate keeping signal from control logic block 120 will again not be provided to input buffer 116. Thus, the Acurrent@ byte will similarly not be written into buffer 116. Buffer 116 inserts a flag 117 as a place keeper for idle bytes in the serial data stream provided by link 114 corresponding to idle bytes between successive burst Ethernet data packets which are not written into buffer 116.

A signal from OCnc payload clock 130 is provided to an output section of buffer 116. Payload clock 130 provides a clock signal synchronized with OCnc payload network 60. Payload clock 130 triggers buffer 116 to output a serial data stream (not shown), corresponding to the stored serial data stream, to an input of serializer-deserializer 132. Since the gate keeping signal provided by control logic block 120 corresponds to the 1 Gb clock rate of the Ethernet network and is therefore faster than the signal provided by OCnc payload clock 130, the rate at which data is written to buffer 116 can be faster than the rate at which data is read from buffer 116. Thus, and in order to prevent a buffer overflow, the values of read pointer 122 and write pointer 124 are provided to register 126 to regulate enabling the gate keeping signal of control logic block 120. A conventional pulse command (not shown) can also be returned to the Ethernet network instruction it to stop sending data. Thus, buffer 116 absorbs the differential between the write rate from the Ethernet network 50 and the read rate to the OCnc payload network 60.

Serializer-deserializer 132 is a conventional circuit and receives the serial data stream read from buffer 116, comprising the valid data content of the data packets and place keeping flags 117, and reconverts each byte in the outputted serial data stream, together with the place keeping flags, to a parallel data (not shown) in a conventional manner as is known in the art. Thus, the parallel data comprises a plurality of bytes and place keeping flags arranged in a one-to-one correspondence with the sequence of bytes in the serial data stream outputted from Ethernet Controller 110 and the omitted inter-packet idle bytes.

Serializer-deserializer 132 outputs the parallel data to an input of OCnc framer 134. OCnc framer 134 frames the parallel data in accordance with a selected protocol of OCnc payload network 60, such as by adding applicable header and routing information, thereby providing the conventional data packet (not shown) for the OCnc payload network. OCnc Framer 134 outputs the OCnc data packet to OCnc payload network 60 to be transmitted.

Encapsulation of the valid Ethernet payload for transmission on the SONET link can also be performed using protocols such as GFP and POS and can be controlled by control logic block 120.

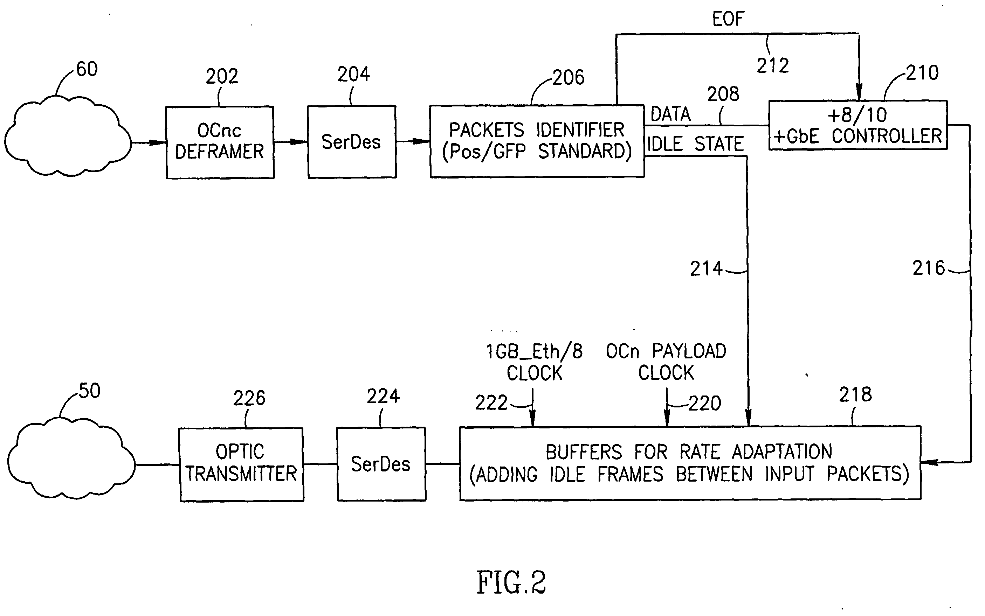

Referring now to Fig. 2, there is shown a schematic block diagram of an embodiment of an apparatus for converting the data packet of the OCnc payload network of Fig. 1 back to the format of the data packet for the 1 Gb Ethernet network relating to the present invention.

OCnc payload network 60 is connected to an input of a conventional OCnc deframer 202. An output of deframer 202 is connected to an input of conventional serializer-deserializer 204, whose output in turn is connected to an input of a conventional packets identifier 206.

A serial data output of packets identifier 206 is connected by a serial data link 208 to a Gb Ethernet Controller 210. A second output of packets identifier 206 is connected by a link 212 to Ethernet Controller 210. A third output of packets identifier 206 is connected to a link 214.

An output of Gb Ethernet Controller 210 is connected by a link 216 to an input of buffer 218. Link 218, from packets identifier 206, is also connected to the input end of buffer 218. An OCnc payload clock 220 is connected to the input end of buffer 218; and a 1 Gb Ethernet clock 222 is connected to the output end of buffer 218.

An output from buffer 218 is connected to an input of serializer-deserializer 224, an output of which is connected to an input of optical transmitter 226. An output of optical transmitter 226 is connected to 1 Gb Ethernet network 50.

The OCnc data packet (not shown) is received by deframer 202 from OCnc payload network 60. Deframer 202 removes any header and routing information which had been added by framer 134, shown in Fig. 1, and thereby provides parallel data which replicates the parallel data outputted from serializer-deserializer 132 also shown in Fig. 1. OCnc deframer 202 outputs the parallel data to serializer-deserializer 204.

Serializer-deserializer 204 converts the parallel data in the OCnc packet to a corresponding serial data stream (not shown) in a conventional manner as is known in the art. Thus, the serial data stream comprises a plurality of bytes and place keeping flags arranged sequentially in a one-to-one correspondence with the bytes and place keeping flags in the parallel data.

Serializer-deserializer 204 provides the serial data stream to packets identifier 206. Packets identifier 206 sequentially receives each byte and place keeping flag in the serial data stream from serializer-deserializer 204 and outputs each received byte and place keeping flag onto serial data link 208 in a same order as received. Packets identifier 206 using a conventional protocol as is known in the art such as a GFP protocol or a POS protocol, also outputs a binary valued logical end-of-packet signal onto link 212. The outputted signal has a value which represents the condition of whether or not a last byte in the converted OCnc packet has been outputted on serial data link 208. In a preferred embodiment, the end-of-packet signal has a logical Alow@ value while packets identifier 206 is outputting bytes to serial data link 208; and a logical Ahigh@ value after the last byte in the serial data stream is outputted.

Bytes in the serial data stream outputted from packets identifier 206 onto serial data link 208 are outputted by Gb Ethernet Controller 210 and communicated by link to buffer 218 where they are written into the buffer in synchronization with the OCnc clock signal from payload clock 220. After the last byte in the serial data stream is provided by packets identifier 206, the logical value of the end-of-packet signal on link 212 switches from a logical Alow@ value to a logical Ahigh@ value. Concurrently therewith, the signal on link 214 also switches to a logical Ahigh@ value indicating an idle state between packets and that no further data is to be currently written into buffer 218.

Data contents of buffer 218 are serially outputted to serializer-deserializer 224 in synchronization with the signal from 1 Gb Ethernet clock 222.

Serializer-deserializer 224 receives the serial data stream from buffer 218, converts the outputted serial data stream to a parallel data packet formatted for 1 Gb Ethernet network 50, and outputs the parallel data packet to optical transmitter 226 which transmits the Ethernet data packet to Ethernet network 50.

Referring now to Fig. 3, an example of a logic circuit of control logic block 120 is shown.

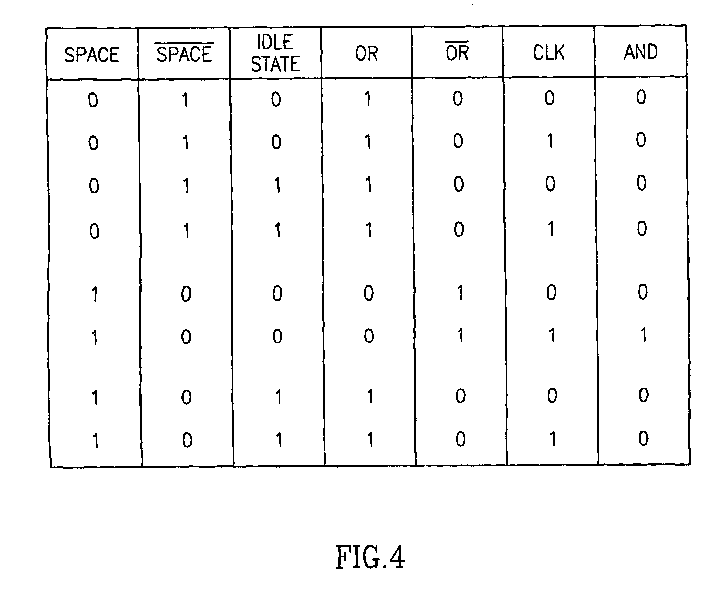

The output of Ethernet Controller 110 is connected by link 118 to the first input of control logic block 120 which in Fig. 3 is a first input of OR gate 302. The output of arithmetic difference register 126 is connected to the second input of control logic block 120 which in Fig. 3 is an input to inverter 304. The first clock signal on link 112 is connected to the 3^{rd} input of control logic block 120 which in Fig. 3 is an input to AND gate 306. AN output from inverter 304 is connected to a second input of OR gate 302. An output from OR gate 302 is connected to an inverted second input of AND gate 306. A truth table of the operation of control logic block 120 is shown in Fig. 4.

Ethernet Controller 110 outputs a logical "high" signal to OR gate 302 during an idle state between packets and a logical "low" value at other times. Arithmetic difference register 126 outputs a logical "high" value to inverter 304 when space is available to receive data in input buffer 116 and a logical "low" value at other times. Inverter 304 inverts the signal from register 126 and provides the inverted signal to the second input of OR gate 302.

OR gate 302 ORs the signal from Ethernet Controller 110 and the inverted signal from register 126 and provides the result to the inverted input of AND gate 306.

When the space available signal from register 126 is "low" (no space), inverter 304 outputs a "high" signal to OR gate 302. Thus, irrespective of the idle state signal from Ethernet Controller 110, OR gate 302 output a "high" signal which is provided to the inverted input of AND gate 306. AND gate 306 outputs a logical "low" value (write disable) disabling writing to buffer 116.

When the space available sign from register 126 is "high" (space available), inverter 304 outputs a "low" signal to OR gate 302. If the idle state signal from Ethernet Controller 110 is "high" (idle state) OR gate 302 outputs a "high" signal which is provided to the inverted input of AND gate 306 which then outputs a logical "low" value (write disable) disabling writing to buffer 116. If the idle state signal from Ethernet Controller 110 is "low" (not idle state) OR gate 302 outputs a "low" signal which is provided to the inverted input of AND gate 306 which ANDs the signal with the 1 Gb clock signal on link 112. Thus, AND gate 306 provides a write-enable signal to buffer 116 in synchronization with the 1 Gb clock signal on link 112 thereby enabling writing to buffer 116.

As is obvious to those skilled in the art other equivalent logical circuits for control logic block 120 can be constructed that similarly provide write enable signals to buffer 116 in response to the first clock signal, the idle signal and the space available signal.

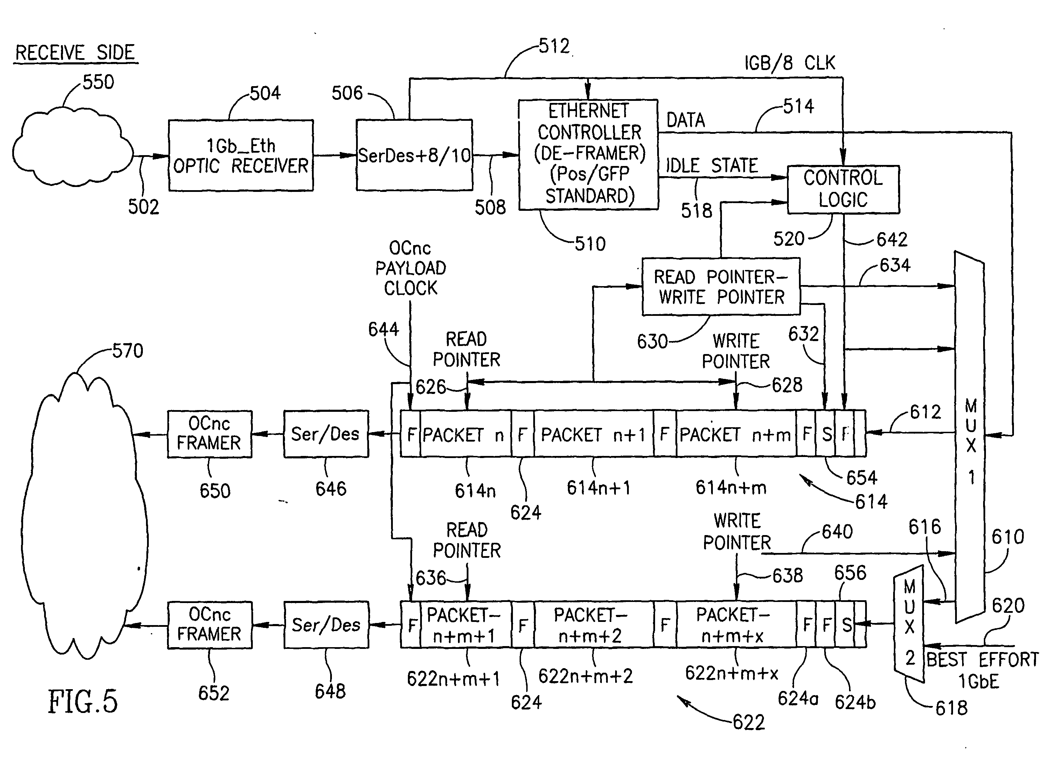

With reference to Fig. 5, there is shown a schematic block diagram of an embodiment of an apparatus according to the present invention. The apparatus is for converting a bursty sequence of conventional 1 Gb Ethernet data packets (not shown) of an origin 1 Gb Ethernet network, schematically shown at 550, to conventional OC12 data packets (not shown) of each of two channels of a multi-channel OC12 payload network schematically shown at 570.

An Ethernet optical fiber 502 is connected at one end to Ethernet network 550. Another end of Ethernet optical fiber 502 is connected to an input of a conventional 1 Gb Ethernet optical receiver 504. An output of optical receiver 504 is connected to an input of a conventional serializer-deserializer 506. A first output of serializer-deserializer 506 is connected by a link 508 to an input of a conventional Ethernet Controller or Deframer 510. A second output of serializer-deserializer 506 is connected to a link 512 which is connected to a second input of Ethernet Controller 510. A data output of Ethernet Controller 510 is connected by a link 514 to an input port of a demultiplexer 610. A second output of Ethernet Controller 510 is connected by a link 518 to a first input of a control logic block 520.

A first output 612 of Demultiplexer 610 is connected to a main input buffer 614 and a second output 616 is connected to a first input of multiplexer 618. A second input 620 to multiplexer 618 is connected to a secondary, lower priority traffic source (not shown). An output of multiplexer 618 is connected to a secondary input buffer 622.

Each of input buffers 614 and 622 has a plurality of buffer sections which are each shown as sequentially, individually numbered sections and which are similarly shown as jointly sequentially numbered. Buffer 614 is shown starting with an "n"-th section shown at 614ₙ, followed by an "n+1"-th section shown at 614ₙ₊₁, and followed by additional sequentially numbered sections (not shown), ultimately ending in an "n+m"-th section shown at 614ₙ₊ₘ. The sections of buffer 622 are similarly sequentially numbered and are numbered to follow in sequence the sections of buffer 614. Thus, a first section of buffer 622 is, in the joint numbering sequence, an An+m+1"-th section such as shown at 622ₙ₊ₘ₊₁, followed by an "n+m+2"-th section shown at 622ₙ₊ₘ₊₂, and followed by additional sequentially numbered sections (not shown), ultimately ending in an "n+m+x"-th section shown at 622ₙ₊ₘ₊ₓ; where n, m and x can be arbitrary non-negative numbers. The buffer sections are not fixed, but are virtual. Sections 614ₙ, 614ₙ₊₁,...,614ₙ₊ₘ; and sections 622ₙ₊ₘ₊₁, 622ₙ₊ₘ₊₂,...,622ₙ₊ₘ₊ₓ of buffers 614 and 622, respectively, can be logically separated by a flag, such as flag 624; or a plurality of flags such as flags 624ₐ, 624_{b}.

Buffer 614 has a read pointer 626 and a write pointer 628 connected to an input of a conventional arithmetic difference register 630. A first output of register 630 is connected to a second input of control logic block 520. A second output of register 630 is connected by a link 632 to an input end of input buffer 614. A third output of register 630 is connected by a link 634 to demultiplexer 610.

Buffer 622 similarly has a read pointer 636 and a write pointer 638. Write pointer 638 is connected by a link 640 to demultiplexer 610.

An output of control logic block 520 is connected by a link 642 to both an input end of input buffer 614 and to demultiplexer 610. An OCnc payload clock 644 is connected to output ends of each of input buffers 614 and 622. In the specific embodiment of Fig. 5, OCnc payload clock 644 is an OC12 payload clock. An output of input buffer 614 is connected to an input of a conventional serializer-deserializer 646; and an output of input buffer 622 is connected to a conventional serializer-deserializer 648.

An output of serializer-deserializer 646 is connected to an input of a conventional OCnc framer 650; and an output of serializer-deserializer 648 is connected to an input of a conventional OCnc framer 652. Respective outputs of OCnc framers 650 and 652 are connected to corresponding channels of multi-channel OCnc payload network 570. In the specific embodiment of Fig. 5, OCnc framers 646 and 648 are OC12 framers, and OCnc payload network 570 is an OC12 payload network.

A 1 GB Ethernet data packet (not shown) is transmitted on 1 GB Ethernet network 550 along optical fiber 502 and is received by optical receiver 504. Optical receiver 504 receives the 1 GB Ethernet data packet and provides the packet to Serializer-deserializer 506. Serializer-deserializer 506 converts all of the bytes in the Ethernet data packet to a corresponding serial data stream (not shown) in a conventional manner as is known in the art. U.S. Patent No. 4,486,739 to Franaszek et al. discloses a method and apparatus for converting a conventional 8-bit parallel data byte into 10 binary digits; and U.S. Patent Nos. 3,334,181 to Bartlett et al. and 4,398,225 to Cornaby et al. disclose an apparatus and method for parallel to serial conversion, and serial to parallel conversion, respectively. Thus, the serial data stream comprises a sequential arrangement of data bytes in a one-to-one correspondence with the parallel bytes in the Ethernet data packet.

Serializer-deserializer 506 communicates the bytes in the serial data stream by link 508 to Ethernet Controller 510. Link 508 can be a conventional fiber optic cable, but can also be a conventional wire connector. Serializer-deserializer 506 also provides a first clock signal to link 512 during a time duration of the serial data stream. The first clock signal corresponds to a timing of Ethernet network 550; and is strobed in synchronization with a timing of the serial data stream outputted by serializer-deserializer 506. The first clock signal has a logical Ahigh@ value when a byte is transmitted in the serial data stream; and is strobed to a logical Alow@ value during an inter-byte time slice between successive bytes.

Ethernet Controller 510 sequentially receives each byte in the serial data stream from link 508 and outputs each received byte via serial data link 514 to an input of demultiplexer 610 in a same order as received.

Ethernet Controller 510 receives the first clock signal from link 512. During each logical Ahigh@ value strobe of the first clock signal, Ethernet Controller 510 receives a Anext in sequence@ byte from the serial data stream from link 508 corresponding to a next byte in the Ethernet data packet. The Anext in sequence@ byte thus becoming a Acurrent@ byte. Ethernet Controller 510 determines if the Acukrent@ byte is a non-idle byte, i.e., that it is part of a serial data stream corresponding to a burst Ethernet data packet; or if the Acurrent@ byte is an idle byte, i.e., it is part of an inter-packet space between successive packet bursts. Ethernet Controller 510 outputs a binary valued logical idle state signal on link 518 based on this determination.

Control logic block 520 combines the idle state signal on link 518 with a binary output from register 630 and the first clock signal from link 512 and provides, via link 642, write enable/disable output signals to input buffer 614 and demultiplexer 610. The write enable/disable signals from control logic block 520 follow the first clock signal on link 512.

Register 630 is a conventional arithmetic difference unit which determines a difference in a numeric value of read pointer 626 and write pointer 628 located at different sections of main input buffer 614. Read pointer 626 designates a location where the serial data stream corresponding to an An@-th Ethernet data packet was previously serially stored in main input buffer 614, and which is next in sequence to be serially read out from main input buffer 614. Write pointer 628 designates a location in main input buffer 614 where the serial data stream corresponding to an An+m@-th Ethernet data packet is next to be written into main input buffer 614.

Register 630 provides a binary valued logical output to control logic block 520 depending on the arithmetic difference between the value of read pointer 626 and the value of write pointer 628. If the arithmetic difference indicates that space is available in main input buffer 614 in which additional data can be written, register 630 outputs a first binary value to control logic block 520. If the arithmetic difference indicates that no space is available in main input buffer 616 into which additional data can be written, then a second binary value is provided to control logic block 520.

Register 630 determines, based on the difference between read pointer 626 and write pointer 628, whether main input buffer 614 is full, i.e., whether main input buffer 614 has met its load threshold. When AM@ serial data streams, corresponding to "M" data packets, are stored in main input buffer 614, the load threshold of main input buffer 614 is met. When a load threshold of main input buffer 614 has been met (i.e., main input buffer 614 is at or approaching a full or overflow state) register 630 outputs to control logic block 520 a logical signal indicating that no further space is available in main buffer 614. Control logic block combines the signal from register 630 with the first clock signal on link 512 and the idle state signal on link 518 and provides a write enable/disable signal onto link 642 as previously described.

Control logic block 520 follows the first clock signal from link 512 and outputs a write-enable gate keeping signal onto link 642 when the first clock signal strobes to a logical "high" value and the idle state signal from link 518 indicates that the Acurrent@ byte on link 514 is not idle and the binary output from register 630 indicates that space is available in main input buffer 614 in which to write additional data. During an inter-byte time slice between successive bytes in the serial data stream when the first clock signal is at a logical Alow@ value, control logic block 520 outputs a write-disable gate keeping signal on link 642 that indicates to main input buffer 614 that no data is to be written, and indicates to demultiplexer 610 that no data is to be outputted.

Control logic block 520 similarly outputs onto link 642 a write disable signal when the idle state signal received from link 518. indicates that the Acurrent@ byte is idle. The write disable signal signals main input buffer 614 to not accept any data to be written into buffer 614. Similarly, the write disable signal signals to demultiplexer 610 to not output any of the idle byte data from link 514 to either of outputs 612 and 616.

Demultiplexer 610 outputs the serial data stream received from Ethernet controller 510 via link 514 to either its first output 612 for writing into main input buffer 614, or its second output 616 for writing into secondary input buffer 622 when the write enable/disable signal from control logic block 520 is in a write-enable state. When the write enable/disable signal from control logic block 520 is in a write-disable state, demultiplexer 610 does not write the serial data stream received from Ethernet controller 510. Thus, control logic block 520 suppresses writing of idle bytes by outputting a write-disable signal onto link 642.

Register 630 also outputs onto link 632 a logical switch flag signal 654 to main input buffer 614 when the arithmetic difference between read pointer 626 and write pointer 628 indicates that main input buffer 614 is approaching or has reached its load threshold. The switch flag signal 654 is appended after any place keeping flags, such as flag 624, which follow after the packet or frame boundary of the serial data stream corresponding to the "n+m"-th data packet currently being written into main buffer 614.

Register 630 also outputs onto link 634 a similar switch signal to demultiplexer 610. When demultiplexer 610 receives the switch signal, at the packet or frame boundary next following the "n+m"-th packet then currently being written into main input buffer 614, demultiplexer 610 ceases outputting further bytes in the received serial data stream to its first output 612, and instead thereafter outputs further bytes in the received serial data stream to its second output 616.

The serial data stream provided by Ethernet controller 510 corresponding to each received 1 Gb Ethernet data packet, excluding idle bytes, is routed to either main input buffer 614 or secondary input buffer 622 by demultiplexer 610 and therein written sequentially into respective buffer 614 or 622.

By default demultiplexer 610 normally outputs the serial data stream received from Ethernet controller 510 to its first output 612. When demultiplexer 610 receives via link 634 the switch signal outputted from register 630, demultiplexer 610 completes writing the serial data stream corresponding to the then current 1 Gb Ethernet data packet, and thereafter switches its outputting from first output 612 to second output 616 for any subsequently received serial data streams.

Second output 616 outputs the serial data stream corresponding to a next in sequence 1 Gb Ethernet data packet to a high-priority input of multiplexer 618. A low priority or "best-effort" input 620 of multiplexer 618 can be connected to another data source having a lower priority access to available transmission capacity on the OCnc payload network 570.

By default multiplexer 618 normally has no data stream provided to its high priority input. Thus, multiplexer 618 normally outputs to secondary input buffer 622 data received from the low priority data stream that is inputted to low priority input 620. However, when demultiplexer 610 switches its outputting from first output 612 to second output 616, multiplexer 620 detects the presence of an input signal at its high priority input and thereafter halts outputting to secondary input buffer 622 the low priority data stream received from low priority input 620 and, instead, following the next packet or frame boundary commences outputting the data stream received from the high priority input connected to second output 616 of demultiplexer 610. Multiplexing and demultiplexing is performed in packets units - that is, switching from one data source to another data source is performed at packets boundaries of the 1 Gb Ethernet packet. When the serial data stream from second output 616 of demultiplexer 610 is provided to the high priority input of multiplexer 618, multiplexer 618 switches outputting from its low priority input 620 to its high priority input at a next following packet or frame boundary of the low priority data stream. When multiplexer 618 switches from its low priority input 620 to its high priority input, multiplexer 618 appends a switch flag 656 following any place keeping flags, such as flags 624a and 624b, following the serial data stream stored in secondary input buffer 622. Switch flag 656 indicates that data transmission in the secondary channel of the OCnc payload network is at this point halted as to the data stream received from low priority input 620, and that access to available bandwidth capacity on the secondary channel has been switched to the serial data stream provided to the high priority input of multiplexer 618 connected to second output 616 of demultiplexer 610. When demultiplexer 610 shifts its outputting from first output 612 to second output 616, multiplexer 618 suspends outputting any data then currently being provided to low priority or "best-effort" input 620, the low priority data being then subject to delay or data loss. Any incomplete packet which was then being written into secondary buffer 622 will be discarded at a receiving end of the OC12 network.

Secondary input buffer 622 provides a feedback signal from its write pointer 638 by a link 640 to demultiplexer 610. If a capacity of secondary input buffer 622 is exhausted the feedback signal of write pointer 638 causes demultiplexer 610 to suspend writing further bytes in the serial data stream to second output 616 until buffer 622 can clear.
When the arithmetic difference between read pointer 626 and write pointer 628 of main input buffer 614 indicates that main input buffer 614 again has capacity, register 630 outputs onto link 632 a logical switch signal to main input buffer 614 that further data can again be written. Similarly, register 630 outputs onto link 634 a logical switch signal to demultiplexer 610 that data can again be written to main input buffer 614. At a packet or frame boundary following an "n+m+x"-th packet then currently being written into secondary input buffer 622, demultiplexer 610 again appends a switch flag 656 to the serial data stream stored in secondary input buffer 622 that indicates that high-priority transmission is at this point switched back to the main channel. Demultiplexer 610 simultaneously switches its outputting from second output 616 back to first output 612.

When demultiplexer 610 terminates outputting the serial data stream to second output 616, multiplexer 618 detects the termination of the serial data stream at its high priority input and thereafter resumes outputting to secondary input buffer 622 any best effort, low priority serial data stream input to multiplexer 618 via input 620.

Input buffers 614 and 622 are conventional shift-register type buffers. A "k"-th data packet can be written into an input end of one of buffers 614 and 622 while a "j"-th data packet can be simultaneously read out of an output end of the respective buffers 614 and 622. Initially an "n"-th data packet can be written into section 614ₙ of main input buffer 614. An "n+1"-th data packet can be written into section 614ₙ₊₁, and successive data packets can be written into successive sections until the "n+m"-th data packet is written into section 614ₙ₊ₘ. After data is read from section 614ₙ the data in section 614ₙ₊₁ is shifted to section 614ₙ, and the data in each successive section is likewise shifted down to the immediately preceding section. Secondary input buffer 622 performs read and write functions in a similar manner.

Read pointer 626 corresponds to section "j" which is currently being read. Write pointer "k" corresponds to section "k" which is currently being written. As long as a reading rate from buffer 614 is not less than a writing rate to buffer 614 the arithmetic difference between read pointer 626 and write pointer 628 computed by register 630 will remain less than the load threshold of buffer 614. Intermittent variations in the difference between the reading rate and writing rates can be accommodated by using a large buffer so long as an average reading rate is not less than an average writing rate. During time periods when the reading rate is less than the writing rate, arithmetic difference unit 630 provides switching signals to buffer 614 and demultiplexer 610 via links 632. and 634, respectively, as previously described.

A signal from a payload clock 644 of multi-channel OCnc payload network 570 is provided to output ends of main and secondary input buffers 614 and 622 to trigger the writing of corresponding serial data streams from primary and secondary input buffers 614 and 622 to corresponding ones of serializer-deserializer 646 and 648, respectively.

Serializer-deserializer 646 and 648 are each conventional circuits that receive the serial data stream outputted from corresponding buffers 614 and 622, respectively, comprising the non-idle bytes, place keeping flags 624 and switch flags 654 and 656. Each of serializer-deserializer 646 and 648 reconverts each byte in the corresponding received serial data stream, together with the place keeping flags and switch flags, to a corresponding parallel data (not shown) in a conventional manner as is known in the art. Thus, serializer-deserializer 646 provides a series of parallel data comprising a plurality of data bytes, place keeping flags, and switch flags arranged in correspondence with the sequence of data bytes in each of the An@-th through An+m@-th serial data streams stored in main input buffer 614. Serializer-deserializer similarly 648 provides a series of parallel data comprising a plurality of data bytes, place keeping flags, and switch flags arranged in correspondence with the sequence of data bytes in the An+m+1@-th through An+m+x@-th serial data streams stored in secondary input buffer 622. Thus, the parallel data provided by each of serializer-deserializer 646 and 648 correspond to the parallel data in the 1 Gb Ethernet data packet received by 1 Gb Ethernet receiver 504 but with the idle bytes omitted.

Serializer-deserializer 646 outputs its parallel data to an input of OCnc framer 650 which frames the parallel data in accordance with a selected protocol of OCnc payload network 570, such as by adding applicable header and routing information, thereby providing the conventional data packet (not shown) for a first channel of multi-channel OCnc payload network 570. The OCnc data packet from OCnc framer 650 is provided to the first channel (not shown) of multi-channel OCnc payload network 570 to be transmitted. Similarly, Serializer-deserializer 648 outputs its parallel data to an input of OCnc framer 652 which frames the parallel data in accordance with the selected protocol of OCnc payload network 570, thereby providing the conventional data packet (not shown) for a second channel of multi-channel OCnc payload network 570. The OCnc data packet from OCnc framer 652 is provided to the second channel (not shown) of multi-channel OCnc payload network 570 to be transmitted.

Although Fig. 5 depicts only two buffers and two channels for the OCnc payload network, it would be obvious to persons skilled in the art that more than two buffers and two channels can be utilized.

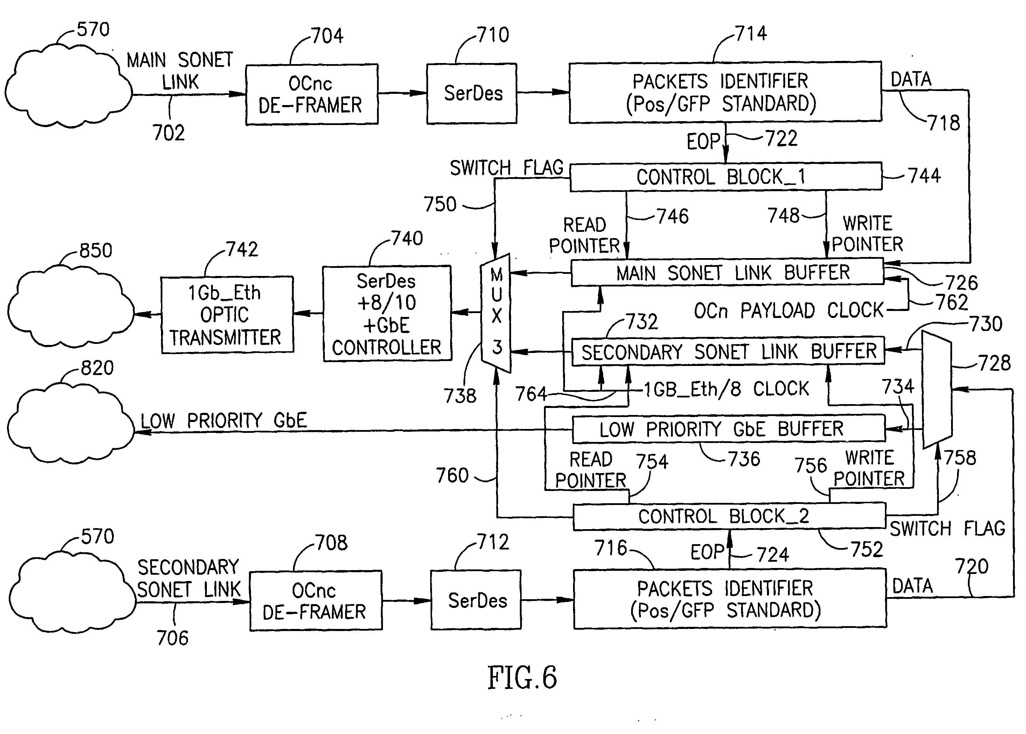

Referring now to Fig. 6, there is shown a schematic block diagram of an embodiment of an apparatus according to the present invention for converting data packets of the multi-channel OCnc payload network of Fig. 5 back to the format of the data packet for the 1 Gb Ethernet network.

A first channel 702 of multi-channel OCnc payload network 570 is connected to an input of a first conventional OCnc deframer 704. A second channel 706 of multi-channel OCnc payload network 570 is connected to an input of a second conventional OCnc deframer 708.

A respective output from each of deframers 704 and 708 is connected to an input of corresponding first and second conventional serializer-deserializer 710 and 712, whose respective outputs are connected to corresponding inputs of first and second conventional packets identifiers 714 and 716. First and second packets identifiers 714 and 716 are conventional packets identifiers having a selected transmission protocol of OCnc network 570 such as a General Frame Protocol (GFP) or a Packet Over Sonet (POS) protocol.

A serial data output of first packets identifier 714 is connected to a first end of a serial data link 718; and a serial data output of second packets identifier 716 is connected to a first end of a serial data link 720. A second output of first packets identifier 714 is connected to a link 722; and a second output of second packets identifier 716 is connected to a link 724. A second end of serial data link 718 is connected to a serial input of a conventional memory buffer such as main SONET Link buffer 726. A second end of serial data link 720 is connected to an input of demultiplexer 728. A first, high priority output 730 of demultiplexer 728 is connected to a conventional memory buffer such as secondary SONET Link buffer 732. A second, low priority output 734. of demultiplexer 728 is connected to a conventional memory buffer such as Best Effort buffer 736.

Respective outputs of main SONET Link buffer 726 and secondary SONET Link buffer 732 are connected to corresponding inputs of multiplexer 738. An output of best effort buffer 736 is connected to a secondary, lower priority destination network 820.

An output of multiplexer 738 is connected to an input of conventional serializer-deserializer / Gb Ethernet controller 740. An output of serializer-deserializer / Gb Ethernet controller 740 is connected to an input of conventional 1 Gb Ethernet optical transmitter 742 whose output is connected to destination 1 Gb Ethernet network 850.

Link 722 is also connected to an input of a first control block 744. First control block 744 is also connected to a read pointer 746 of main SONET link buffer 726, and to a write pointer 748 of main SONET link buffer 726. An output of control block 744 is connected by a link 750 to an input of multiplexer 738.

Link 724 is similarly connected to an input of a second control block 752. Second control block 752 is also connected to a read pointer 754 of secondary SONET link buffer 732, and to a write pointer 756 of secondary SONET link buffer 732. A first output of second control block 752 is connected by a link 758 to an input of demultiplexer 728; and a second output of second control block 752 is connected by a link 760 to an input of multiplexer 738.

An OCnc payload clock 762 is connected to respective input ends of each of main SONET link buffer 726, secondary SONET link buffer 732, and Best Effort buffer 736. A 1 Gb Ethernet network clock 764 is connected to respective output ends of each of main and secondary sonnet link buffers 726 and 732.

As described with respect to Fig. 5, a series of OCnc data packets (not' shown) are transmitted via first channel 702 of multi-channel OCnc payload network 570 and are received by conventional OCnc deframer 704. Deframer 704 removes from each packet any header and routing information which was added by framer 650, shown in Fig. 5, and thereby provides parallel data which replicates the parallel data outputted from serializer-deserializer 746, also shown in Fig. 5. OCnc deframer 704 outputs the parallel data from each packet to serializer-deserializer 710.

Serializer-deserializer 710 converts the parallel data in each received OCnc packet to a corresponding serial data stream (not shown) in a conventional manner as is known in the art. Thus, the serial data stream outputted from serializer-deserializer 710 comprises a plurality of data bytes, place keeping flags, and switch flags arranged sequentially in correspondence with the data bytes, place keeping flags, and switch flags in the serial data stream outputted from main buffer 614 of Fig. 5. Serializer-deserializer 710 provides the serial data stream to packets identifiers 714.

Packets identifier 714 receives the serial data stream from serializer-deserializer 710 and outputs to link 718 each received data byte in the serial data stream in a same order as received. Packets identifiers 714 outputs to control block 744 via link 722 a logical end-of-packet signal at a logical end of a serial data stream corresponding to an end of an OCnc data packet. Packets identifier 714 also outputs to control block 744 via link 722 any place keeping flags, such as flag 724 shown in Fig. 5, and any switch flags, such as flag 754 also shown in Fig. 6.

Control block 744 controls read and write operations of main SONET link buffer 726. Control block 744 receives a value of read pointer 746 of main SONET link buffer 726; and receives a value of write pointer 748 of main SONET link buffer 726. If a difference between the value of read pointer 746 and the value of write pointer 748 indicates that no space is available in main SONET link buffer 726, control block 744 can return a conventional pause command to packets identifier 714.

The serial data stream outputted from packets identifier 714 to link 718, corresponding to the data bytes in a respective received OCnc data packet, are written sequentially into main SONET link buffer 726 in synchronization with a signal from the OCnc payload clock 762. Main SONET link buffer 726, in synchronization with a signal from 1 Gb Ethernet clock 764 sequentially outputs the respective serial data stream to multiplexer 738 which, in turn, outputs the respective serial data stream to serializer/deserializer 740.

When packets identifier 714 detects a place keeping flag in the serial data stream received from serializer/deserializer 710, such as flag 724 shown in fig. 5, packets identifier 714 outputs to control block 744 via link 722 an end of packet signal. Control block 744 receives the end of packet signal from packets identifier 714 and triggers multiplexer 738 to read the serial data stream from main Sonet link buffer 726.

Whenever packets identifier 714 identifies a switch flag in the serial data stream received from serializer/deserializer 710, such as flag 754 shown in Fig. 5, packets identifier 714 outputs to control block 744 via link 722 a switch command. Control block 744 receives the switch command from packets identifier 714 and signals multiplexer 738, via link 750, that a next-in-sequence transmitted data packet was switched to second channel 706. After completing the inputting of the current serial data stream corresponding to a current data packet from main SONET link buffer 726, multiplexer 738 switches its inputting to its second input connected to secondary SONET link buffer 732.

Similar to primary channel 702, OCnc data packets (not shown) are transmitted via second channel 706 of multi-channel OCnc payload network 870 and are received by conventional OCnc deframer 708. Deframer 708 removes from each packet any header and routing information which was added by framer 652, shown in Fig. 5, and thereby provides parallel data which replicates the parallel data outputted from serializer-deserializer 648, also shown in Fig. 5. OCnc deframer 708 outputs the parallel data from each packet to serializer-deserializer 712.

Serializer-deserializer 712 converts the parallel data in each received OCnc packet to a corresponding serial data stream (not shown) in a conventional manner as is known in the art. Thus, the serial data stream outputted from serializer-deserializer 712 comprises a plurality of data bytes, place keeping flags, and switch flags arranged sequentially in correspondence with the data bytes, place keeping flags, and switch flags in the serial data outputted from secondary buffer 622 of Fig. 5. Serializer-deserializer 712 provides the serial data stream to packets identifiers 716.

Packets identifier 716 receives the serial data stream from serializer-deserializer 712, discards any incomplete data packets, and outputs to link 720 each received data byte in the serial data stream, corresponding to complete data packets, in a same order as received. Packets identifiers 716 outputs to control block 752 via link 724 a logical end-of-packet signal at a logical end of a serial data stream corresponding to an end of an OCnc data packet. Packets identifier 716 also outputs to control block 752 via link 724 any place keeping flags, such as flags 624a and 624b shown in Fig- 5, and any switch flags, such as flag 656 also shown in Fig. 5.

Control block 752 controls read and write operations of secondary SONET link buffer 732. Control block 752 also controls switching operations of demultiplexer 728. Control block 752 receives a value of read pointer 754 of secondary SONET link buffer 732; and receives a value of write pointer 756 of secondary SONET link buffer 732. If a difference between the value of read pointer 754 and the value of write pointer 756 indicates that no space is available in secondary SONET link buffer 732, control block 752 can return a pause command to packets identifier 716.

The serial data stream outputted from packets identifier 716 to link 720, corresponding to the data bytes in a respective received OCnc data packet, are outputted by packets identifier 716 to link 720 and inputted therefrom by demultiplexer 728. By default data inputted by demultiplexer 728 from link 720 is outputted sequentially from demultiplexer 728 via second output 734 and written therefrom into best effort buffer 736 in synchronization with a signal from the OCnc payload clock 762. Data from best effort buffer 736 is, in turn, outputted to lower priority network 820.

When packets identifier 714 detects a switch flag 654 appended to the serial data stream from first channel 702, packets identifier 716 detects a corresponding switch flag 656 appended to the.serial data stream from second channel 704. Packets identifier 716 provides the switch flag 656 from the serial data stream received from second channel 706 to control block 752. Control block 752 receives the switch flag 656 and, like control block 744, signals to multiplexer 738, via link 760, to switch its inputting function to its secondary input connected to the output of secondary SONET link buffer 732. Control block 752 simultaneously provides a switch signal to demultiplexer 728 via link 758 to switch its outputting from its default second output 734 to its high priority first output 730. Thereafter, serial data provided by packets identifier 716 to link 720 is written into demultiplexer 728 and, in turn, written to secondary SONET link buffer 732 in synchronization with the signal from the OCnc payload clock 762.

Secondary SONET link buffer 732, like main SONET link buffer 726, sequentially outputs the respective serial data stream to multiplexer 738 in synchronization with a signal from the 1 Gb Ethernet clock 764. Multiplexer 738, in turn, outputs the respective serial data stream to serializer/deserializer 740.

When packets identifier 716 detects a place keeping flag in the serial data stream received from serializer/deserializer 712, such as flag 724a shown in fig. 5, packets identifier 716 outputs to control block 752 via link 724 an end of packet signal. Control block 752 receives the end of packet signal from packets identifier 716 and triggers multiplexer 738 to read the serial data stream from secondary Sonet link buffer 732.

Multiplexer 738 reads respective serial data streams from one or the other of main Sonet link buffer 726 and secondary Sonet link buffer 732 in synchronization with a signal from 1 Gb Ethernet clock 764.. Multiplexer 738 selectively reads from one or the other of main Sonet link buffer 726 and secondary Sonet link buffer 732 in response to switch signals provided by control block 744 and control block 752 which indicate that sequentially transmitted data packets from at originating 1Gb Ethernet network were switched and transmitted using multiple channels of the OCnc payload network.

Respective serial data streams read by multiplexer 738 from one or the other of main Sonet link buffer 726 and secondary Sonet link buffer 732 are outputted, in sequence, from multiplexer 738 to serializer-deserializer / Gb Ethernet controller 740. Serializer-deserializer / Gb Ethernet controller 740 detects the presence of any place keeping flags 624 that may be present in the respective transmitted serial data stream and substitutes, in lieu thereof, as many idle bytes (not shown) as are required to fill out a packet size for a destination 1 Gb Ethernet network thereby restoring the idle bytes removed by the circuit of Fig. 5. Serializer-deserializer / Gb Ethernet controller 740 then converts the serial data stream, together with the reinserted idle bytes, to a parallel data packet in a conventional manner as is known in the art thereby reconstructing the original 1 Gb Ethernet data packet received by the circuit of Fig. 5 from 1 Gb Ethernet network 850. Serializer-deserializer / Gb Ethernet controller 740 outputs the reconstructed 1 Gb Ethernet data packet to 1 Gb Ethernet optical transmitter which transits the 1 Gb Ethernet data packet to 1 Gb Ethernet network 850.

The present invention has now been described with respect to a selected embodiment thereof. However, other embodiments would be obvious to those skilled in the art without departing from the scope of the appended claims.

## Claims

1. A method for converting a data stream having a plurality of broadband network data packets and idle bytes interposed therebetween received from a broadband network (550) for communication on a payload network (570) having a narrower bandwidth than said broadband network, said payload network having two channels, one of which having a high priority and the other having a low priority, the method comprising:
receiving a first data from a broadband network data packet from the broadband network;
detecting idle bytes following said first data;
removing said idle bytes from said first data, thereby providing a reduced data; and
selectively providing said reduced data to one or another of said two channels of said payload network, to ensure communicating said reduced data via either the high priority channel or, when the capacity of an input buffer of the high priority channel approaches or has reached its load threshold, via both said channels.

2. The method as claimed in claim 1, wherein said broadband network (550) is a 1 Gb Ethernet network.

3. The method as claimed in claim 1 wherein said payload network (570) is a SONET network.

4. The method as claimed in claim 3 wherein said SONET network is selected from the group consisting of OC1, OC3, and OC12.

5. The method as claimed in claim 1 wherein said broadband network data packet is formatted in accordance with a protocol of said broadband network.

6. The method as claimed in claim 1, further comprising:
converting said broadband network data packet into a serial data-stream;
identifying idle bytes and non-idle bytes in said serial data-stream;
writing said non-idle bytes into a first buffer (614) of said high priority channel if space is available therein;
writing said non-idle bytes into a second buffer (622) of said low priority channel if space is not available in said first buffer (614);
selectively outputting said non-idle bytes from said first and second buffers;
converting said outputted non-idle bytes into respective narrow bandwidth payload network data packets.

7. The method as claimed in claim 6 further comprising writing a place keeping flag (624) into said first and second buffers in substitution of an idle byte omitted from the data stream stored therein.

8. The method of claim 7 further comprising a GFP or POS protocol.

9. The method of claim 7 further comprising outputting said place keeping flag (624) from said buffer.

10. The method of claim 6 further comprising writing a switch flag (632) into at least one of said first and second buffers whenever a first of two successive serial data streams is written into one of said two channels and a second of two successive data streams is written into another of said two channels.

11. The method as claimed in claim 6 wherein said step of identifying said idle bytes and said non-idle bytes is in response to a first clock signal, said first clock signal corresponding to a timing of said broadband network data packet.

12. The method as claimed in claim 6 wherein said step of writing said non-idle bytes into said buffer is in response to a first clock signal (512), said first clock signal corresponding to a timing of said broadband network data packet.

13. The method as claimed in claim 6 wherein said step of converting said outputted non-idle bytes to said narrow bandwidth payload network data packet is in response to a payload network clock signal (644).

14. The method as claimed in claim 6 further comprising deserializing said non-idle bytes outputted from any of said buffers.

15. The method as claimed in claim 6 further comprising formatting said narrow bandwidth payload network data packet in accordance with a protocol of said payload network.

16. A method for converting data packets, received from a narrow bandwidth payload network (570) having two channels (702, 706) of different priorities for communication on a broadband network (850) having a bandwidth wider than said payload network, comprising:
selectively receiving narrow bandwidth payload network data packets, each having a data, either from the one (702) of said two channels (702, 706) having a high priority, or from both of said channels (702, 706) ;
appending a data segment comprising idle bytes to the data of each of said narrow bandwidth payload network data packet thereby providing respective enhanced data;
sequencing the respective enhanced data in relation to each other; and
providing said enhanced data to said broadband network (850).

17. The method as claimed in claim 16 wherein said broadband network (850) is a 1 Gb Ethernet network.

18. The method as claimed in claim 16 wherein said payload network (570) is a SONET network.

19. The method as claimed in claim 18 wherein said SONET network is selected from the group consisting of OC1, OC3, and OC12.

20. The method as claimed in claim 16 wherein said narrow bandwidth payload network data packet is formatted in accordance with a protocol of said payload network.

21. The method of claim 20 wherein said protocol is a GFP protocol or a POS protocol.

22. The method as claimed in claim 16 further comprising:
converting each of said narrow bandwidth payload network data packets into a serial data-stream comprising bytes;
identifying said data as a first data segment in each of said serial data-streams;
identifying a place keeping flag in each of said serial data-streams;
substituting a second data segment being the data segment comprising idle bytes in each said serial data-streams in substitution of said place keeping flag;
converting the obtained serial data stream to a corresponding broadband network data packet.

23. The method as claimed in claim 22 wherein said step of identifying a first data segment is in response to a payload clock signal (762) corresponding to a timing of said payload network.

24. The method as claimed in claim 22 further comprising writing said first data segment to a first buffer (726).

25. The method as claimed in claim 24 wherein said step of writing said first data segment to a buffer is in response to a payload clock signal (762) corresponding to a timing of said payload network (570).

26. The method as claimed in claim 24 wherein said step of outputting said first data segment from said buffer (726) is in response to a broadband clock signal (764).

27. The method as claimed in claim 22 further comprising formatting said broadband network data packet in accordance with a protocol of said broadband network (850).

28. The method as claimed in claims 1 and 16, for converting a first broadband network data packet and a second broadband network data packet from a format of the broadband network (550) to a format of the narrow bandwidth payload network (570) for transmission thereon and thereafter converting back to a format of a broadband network (850), comprising:
converting said first broadband network data packet to a first serial data stream;
identifying idle bytes and non-idle bytes in said first serial data stream;
selectively sequentially writing said non-idle bytes of said first data stream into one (614) of two buffers (614, 622);
inserting a place keeping flag (624) into said one (614) of two buffers at a location corresponding to a location of an idle byte next following said non-idle byte;
converting said second broadband network data packet to a second serial data stream;
identifying idle bytes and non-idle bytes in said second serial data stream;
selectively sequentially writing said non-idle bytes of said second serial data stream into another (622) of two buffers;
inserting a place keeping flag (624) into another (622) of two buffers at a location corresponding to a location of an idle byte next following said non-idle byte;
inserting a switch flag (632) into said one of two buffers;
serially outputting a contents of each of said two buffers (614, 622);
converting said outputted contents to respective narrow bandwidth payload network data packets;
converting said narrow bandwidth payload network data packets to respective third serial data streams;
writing said third serial data streams to respective buffers (726, 732);
identifying said place keeping flags in each of said third serial data streams;
replacing said place keeping flags with substitute idle bytes;
resequencing said respective third serial data streams in relation to each other.

29. A communication system for converting data packets between a broadband network (550) and a narrower bandwidth payload network (570), said payload network having two channels, one of which having a high priority and the other having a low priority, the communication system comprising:
means for providing first data, said first data having idle bytes and non-idle bytes;
an idle bytes identifier (510) in communication with said means for providing first data, said idle bytes identifier (510) serving for identifying idle bytes in said first data;
a demultiplexer (610) connected to said idle bytes identifier (510) and serving for receiving information from said idle bytes identifier (510) ;
two buffers (614, 622) connected to said demultiplexer (610), each buffer for buffering data to be provided to a respective channel among the high priority and the low priority channels, wherein the demultiplexer (610) is adapted to pass data to the buffers (614, 622) for buffering data to be provided either to the high priority channel or, when the capacity of the buffer (614) of the high priority channel approaches or has reached its load threshold, to both said channels;
a logic circuit (520) connected to said idle bytes identifier (510) and said buffers (614, 622) that can disable writing of said first data into said buffers (614, 622) in response to a signal from said idle bytes identifier (510) that an idle byte is identified.

30. The communication system as claimed in claim 29 wherein said broadband network (550) is a 1 Gb Ethernet network.

31. The communication system as claimed in claim 29 wherein said narrower bandwidth payload (570) network is a SONET network.

32. The communications system as claimed in claim 31 wherein said SONET network is selected from the group consisting of OC1, OC3 and OC 12.

33. The communications system as claimed in claim 29 further comprising a first converter (504) that can convert a data packet in a format of said broadband network to said first data.

34. The communications system as claimed in claim 29 wherein each of said buffers further comprises:
a read pointer and a write pointer (630);
wherein said logic circuit (520) is further controlled by said read pointer and said write pointer (630).

35. The communications system as claimed in claim 29 wherein said first data can be written into each of said buffers at a rate corresponding to a clock rate (512) of said broadband network.

36. The communications system as claimed in claim 29 further comprising a place keeping flag (624) in said buffers (614, 622) in substitution of said idle bytes when said logic gate disables writing of said first data.

37. The communications system as claimed in claim 36 wherein said non-idle bytes and said place keeping flags (624) can be read from said buffers at a rate corresponding to a clock rate (644) of said payload network.

38. The communications system as claimed in claim 36 further comprising a second converter (650, 652) that can convert said non-idle bytes and said place keeping flags from said buffers to a data packet in a format for said narrower bandwidth payload network.

39. A communication system for converting data packets between a payload network (570), having a first and a second channels (702, 706) of different priorities, to a broadband network (850) having a wider bandwidth than said payload network, comprising:
means for passing first and second data via said first and second channels (702, 706), respectively, said first and second data having non-idle bytes and place keeping flags;
first and second buffers (726, 732) into which said first and second data can be written, respectively;
a multiplexer (738) connected to said first and second buffers (726, 732) and capable of receiving said first data from the first buffer (726) or said first and second data from the buffers (726, 732);
means for replacing said place keeping flags by substitute idle bytes.

40. The communication system as claimed in claim 39 wherein said broadband network (850) is a 1 Gb Ethernet network.

41. The communication system as claimed in claim 39 wherein said payload network (570) is a SONET network.

42. The communication system as claimed in claim 41 wherein said SONET network is selected from the group consisting of: OC1, OC3, and OC12.

43. The communications system as claimed in claim 39, further comprising a first converter (704, 710, 708, 712) that can convert a data packet in a format of said payload network to said first data.

44. The communications system as claimed in claim 39, further comprising a second converter (740, 742) that can convert an output of said buffers to a data packet in a format of said broadband network (850).

45. The communications system as claimed in claim 39, wherein said first and second data can be written into said first and second buffers (726, 732) at a rate corresponding to a clock rate (762) of said payload network.

46. The communications system as claimed in claim 39, wherein said first and second buffers (726, 732) can write said first and second data at a rate corresponding to a clock rate (764) of said broadband network.

47. The communications system as claimed in claim 39, further comprising a logic circuit (744) that can switch an input of said multiplexer from one of said two buffers to another of said two buffers in response to a switch flag appended to one of said first and second data.

48. The method according to Claim 1, further comprising using said low priority channel on an as-needed basis for transmitting said reduced data, while normally transmitting a low priority traffic via said low priority channel.

49. The method according to Claim 16, further comprising receiving from said low priority channel a low-priority traffic whenever capacity of said low priority channel allows its transmission.

50. The communication system according to Claim 29, further comprising a multiplexer (618) connected at one its input to said demultiplexer (610) and at its output to one of said buffers (622) having a lower priority, the multiplexer being adapted to receive at its another input a low-priority traffic and transmit it to said lower priority buffer whenever capacity is available.

51. The system according to Claim 39, further comprising a demultiplexer (728) connected at its input to said second channel having a lower priority, at one its output to said second buffer (732) and at its another output to a low-priority traffic buffer (736), said demultiplexer serving for separating a low priority traffic whenever transmitted via said second channel.

## Patentansprüche

1. Verfahren zum Umwandeln eines Datenstroms mit einer Vielzahl von Breitbandnetzwerk-Datenpaketen und dazwischen angeordneten Leerbytes, der von einem Breitbandnetzwerk (550) zur Datenkommunikation auf einem Nutzlast-Netzwerk (570) mit einer geringeren Bandbreite als derjenigen des Breitbandnetzwerks empfangen worden ist, wobei das Nutzlast-Netzwerk zwei Kanäle hat, von denen einer eine hohe Priorität und der andere eine niedrige Priorität hat, wobei das Verfahren umfasst:
Empfangen erster Daten von einem Breitbandnetzwerk-Datenpaket aus dem Breitbandnetzwerk;
Erfassen von Leerbytes, die den ersten Daten folgen;
Entfernen der Leerbytes aus den ersten Daten, **dadurch** Bereitstellen verringerter Daten; und
wahlweises Bereitstellen der verringerten Daten für den einen oder den anderen der zwei Kanäle des Nutzlast-Netzwerks, um ein Übertragen der verringerten Daten entweder über den Kanal hoher Priorität oder, wenn die Kapazität eines Eingangszwischenspeichers des Kanals hoher Priorität sich seinem Lastgrenzwert nähert oder ihn erreicht, über beide Kanäle sicherzustellen.

2. Verfahren nach Anspruch 1, wobei das Breitbandnetzwerk (550) ein 1-GB-Ethernet-Netzwerk ist.

3. Verfahren nach Anspruch 1, wobei das Nutzlast-Netzwerk (570) ein SONET-Netzwerk ist.

4. Verfahren nach Anspruch 3, wobei das SONET-Netzwerk aus der Gruppe ausgewählt wird, die OC1, OC3 und OC12 umfasst.

5. Verfahren nach Anspruch 1, wobei das Breitbandnetzwerk-Datenpaket in Übereinstimmung mit einem Protokoll des Breitbandnetzwerks formatiert ist.

6. Verfahren nach Anspruch 1, weiterhin umfassend:
Umwandeln des Breitbandnetzwerk-Datenpakets in einen seriellen Datenstrom;
Identifizieren von Leerbytes und Nichtleerbytes in dem seriellen Datenstrom;
Schreiben der Nichtleerbytes in einen ersten Zwischenspeicher (614) des Kanals hoher Priorität, falls darin Platz vorhanden ist;
Schreiben der Nichtleerbytes in einen zweiten Zwischenspeicher (622) des Kanals niedriger Priorität, falls kein Platz in dem ersten Zwischenspeicher (614) vorhanden ist;
wahlweises Ausgeben der Nichtleerbytes aus dem ersten und zweiten Zwischenspeicher;
Umwandeln der ausgegebenen Nichtleerbytes in entsprechende Datenpakete des Nutzlast-Netzwerks geringer Bandbreite.

7. Verfahren nach Anspruch 6, weiterhin umfassend ein Schreiben eines Platzhalterflags (624) in die ersten und zweiten Zwischenspeicher als Ersatz für ein Leerbyte, das aus dem darin gespeicherter Datenstrom entfernt wurde.

8. Verfahren nach Anspruch 7, weiterhin umfassend ein GFP- oder POS-Protokoll.

9. Verfahren nach Anspruch 7, weiterhin umfassend ein Ausgeben des Platzhalterflags (624) aus dem Zwischenspeicher.

10. Verfahren nach Anspruch 6, weiterhin umfassend ein Schreiben eines Schaltflags (632) in mindestens einen der ersten und zweiten Zwischenspeicher immer dann, wenn ein erster von zwei aufeinanderfolgenden seriellen Datenströmen in einen der zwei Kanäle geschrieben wird und ein zweiter von zwei aufeinanderfolgenden seriellen Datenströmen in einen anderen der zwei Kanäle geschrieben wird.

11. Verfahren nach Anspruch 6, wobei der Schritt des Identifizierens der Leerbytes und der Nichtleerbytes als Antwort auf ein erstes Taktsignal geschieht, wobei das erste Taktsignal mit einem Takt des Breitbandnetzwerk-Datenpakets übereinstimmt.

12. Verfahren nach Anspruch 6, wobei der Schritt des Schreibens der Nichtleerbytes in den Zwischenspeicher als Antwort auf ein erstes Taktsignal (512) geschieht, wobei das erste Taktsignal mit einem Takt des Breitbandnetzwerk-Datenpakets übereinstimmt.

13. Verfahren nach Anspruch 6, wobei der Schritt des Umwandelns der ausgegebenen Nichtleerbytes in das Datenpaket des Nutzlast-Netzwerks geringer Bandbreite als Antwort auf ein Nutzlast-Netzwerk-Taktsignal (644) geschieht.

14. Verfahren nach Anspruch 6, weiterhin umfassend ein seriell-paralleles Wandeln der Nichtleerbytes, die von irgendeinem der Zwischenspeicher ausgegeben werden.

15. Verfahren nach Anspruch 6, weiterhin umfassend ein Formatieren des Datenpakets des Nutzlast-Netzwerks geringer Bandbreite in Übereinstimmung mit einem Protokoll des Nutzlast-Netzwerks.

16. Verfahren zum Umwandeln von Datenpaketen, die von einem Nutzlast-Netzwerk (570) geringer Bandbreite mit zwei Kanälen (702, 706) unterschiedlicher Prioritäten empfangen wurden, zur Datenkommunikation auf einem Breitbandnetzwerk (850) mit einer Bandbreite, die größer ist als diejenige des Nutzlast-Netzwerks, umfassend:
wahlweises Empfangen von Datenpaketen des Nutzlast-Netzwerks geringer Bandbreite, jeweils mit Daten entweder von demjenigen (702) der zwei Kanäle (702, 706) mit einer hohen Priorität oder von beiden Kanälen (702, 706);
Anhängen eines Datensegments, das Leerbytes umfasst, an die Daten jedes Datenpakets des Nutzlast-Netzwerks geringer Bandbreite, wodurch entsprechende vermehrte Daten bereitgestellt werden;
sequentielles Ordnen der entsprechenden vermehrten Daten in Bezug aufeinander; und
Bereitstellen der vermehrten Daten für das Breitbandnetzwerk (850).

17. Verfahren nach Anspruch 16, wobei das Breitbandnetzwerk (850) ein 1-GB-Ethernet-Netzwerk ist.

18. Verfahren nach Anspruch 16, wobei das Nutzlast-Netzwerk (570) ein SONET-Netzwerk ist.

19. Verfahren nach Anspruch 18, wobei das SONET-Netzwerk aus der Gruppe ausgewählt wird, die OC1, OC3 und OC12 umfasst.

20. Verfahren nach Anspruch 16, wobei das Datenpaket des Nutzlast-Netzwerks geringer Bandbreite in Übereinstimmung mit einem Protokoll des Nutzlast-Netzwerks formatiert ist.

21. Verfahren nach Anspruch 20, wobei das Protokoll ein GFP-Protokoll oder ein POS-Protokoll ist.

22. Verfahren nach Anspruch 16, weiterhin umfassend:
Umwandeln jedes der Datenpakete des Nutzlast-Netzwerks geringer Bandbreite in einen seriellen Datenstrom, der Bytes umfasst;
Identifizieren der Daten als ein erstes Datensegment in jedem der seriellen Datenströme;
Identifizieren eines Platzhalterflags in jedem der seriellen Datenströme;
Ersetzen eines zweiten Datensegments, welches das Datensegment ist, das Leerbytes in jedem der seriellen Datenströme als Ersatz für das Platzhalterflag umfasst;
Umwandeln des erhaltenen seriellen Datenstroms in ein entsprechendes Breitbandnetzwerk-Datenpaket.

23. Verfahren nach Anspruch 22, wobei der Schritt des Identifizierens eines ersten Datensegments als Antwort auf ein Nutzlast-Taktsignal (762) geschieht, das mit einem Takt des Nutzlast-Netzwerks übereinstimmt.

24. Verfahren nach Anspruch 22, weiterhin umfassend ein Schreiben des ersten Datensegments in einen ersten Zwischenspeicher (726).

25. Verfahren nach Anspruch 24, wobei der Schritt des Schreibens des ersten Datensegments in einen Zwischenspeicher als Antwort auf ein Nutzlast-Taktsignal (762) geschieht, das mit einem Takt des Nutzlast-Netzwerks (570) übereinstimmt.

26. Verfahren nach Anspruch 24, wobei der Schritt des Ausgebens des ersten Datensegments aus dem Zwischenspeicher (726) als Antwort auf ein Breitband-Taktsignal (764) geschieht.

27. Verfahren nach Anspruch 22, weiterhin umfassend ein Formatieren des Breitbandnetzwerk-Datenpakets in Übereinstimmung mit einem Protokoll des Breitbandnetzwerks (850).

28. Verfahren nach einem der Ansprüche 1 oder 16 zum Umwandeln eines ersten Breitbandnetzwerk-Datenpakets und eines zweiten Breibandnetzwerk-Datenpakets aus einem Format des Breitbandnetzwerks (550) in ein Format des Nutzlast-Netzwerks geringer Bandbreite (570) zum Übertragen darin und zum nachfolgenden Rückumwandeln in ein Format eines Breitbandnetzwerks (850), umfassend:
Umwandeln des ersten Breitbandnetzwerk-Datenpakets in einen ersten seriellen Datenstrom;
Identifizieren von Leerbytes und Nichtleerbytes in dem ersten seriellen Datenstrom;
wahlweises sequentielles Schreiben der Nichtleerbytes des ersten Datenstroms in einen (614) von zwei Zwischenspeichern (614, 622);
Einfügen eines Platzhalterflags (624) in den einen (614) der zwei Zwischenspeicher an einer Stelle, die mit einer Stelle eines Leerbytes übereinstimmt, das dem Nichtleerbyte unmittelbar nachfolgt;
Umwandeln des zweiten Breitbandnetzwerk-Datenpakets in einen zweiten seriellen Datenstrom;
Identifizieren von Leerbytes und Nichtleerbytes in dem zweiten seriellen Datenstrom;
wahlweises sequentielles Schreiben der Nichtleerbytes des zweiten Datenstroms in einen anderen (622) der zwei Zwischenspeicher;
Einfügen eines Platzhalterflags (624) in den anderen (622) der zwei Zwischenspeicher an einer Stelle, die mit einer Stelle eines Leerbytes übereinstimmt, das dem Nichtleerbyte unmittelbar nachfolgt;
Einfügen eines Schaltflags (632) in den einen (632) der zwei Zwischenspeicher;
serielles Ausgeben eines Inhalts jedes der zwei Zwischenspeicher (614, 622);
Umwandeln des ausgegebenen Inhalts in entsprechende Datenpakete des Nutzlast-Netzwerks geringer Bandbreite;
Umwandeln der Datenpakete des Nutzlast-Netzwerks geringer Bandbreite in entsprechende dritte serielle Datenströme;
Schreiben der dritten seriellen Datenströme in entsprechende Zwischenspeicher (726, 732);
Identifizieren der Platzhalterflags in jedem der dritten seriellen Datenströme;
Ersetzen der Platzhalterflags durch Ersatzleerbytes;
sequentielles Rückordnen der entsprechenden dritten Datenströme in Bezug aufeinander.

29. Kommunikationssystem zum Umwandeln von Datenpaketen zwischen einem Breitbandnetzwerk (550) und einem Nutzlast-Netzwerk (570) geringerer Bandbreite, wobei das Nutzlast-Netzwerk zwei Kanäle hat, von denen einer eine hohe Priorität und der andere eine niedrige Priorität hat, wobei das Kommunikationssystem umfasst:
Mittel zum Bereitstellen erster Daten, wobei die ersten Daten Leerbytes und Nichtleerbytes umfassen;
einen Leerbytes-Identifizierer (510) in Kommunikation mit den Mitteln zur Bereitstellung der ersten Daten, wobei der Leerbytes-Identifizierer (510) zum Identifizieren von Leerbytes in den ersten Daten dient;
einen mit dem Leerbytes-Identifizierer (510) verbundenen Demultiplexer (610), der zum Empfangen von Information von dem Leerbytes-Identifizierer (510) dient;
zwei mit dem Demultiplexer (610) verbundene Zwischenspeicher (614, 622),
wobei jeder Zwischenspeicher zum Zwischenspeichern von Daten, die einem jeweiligen Kanal aus den Kanälen hoher Priorität und niedriger Priorität bereitzustellen ist, wobei der Demultiplexer (610) dazu ausgebildet ist, Daten zu den Zwischenspeichern (614, 622) zum Zwischenspeichern von Daten weiterzureichen, um entweder dem Kanal hoher Priorität bereitgestellt zu werden, oder, wenn die Kapazität des Speichers des Kanals hoher Priorität sich ihrem Lastgrenzwert nähert oder ihn erreicht, beiden Kanälen;
eine mit dem Leerbytes-Identifizierer (510) und den Zwischenspeichern (614, 622) verbundene Logikschaltung (520), die ein Schreiben der ersten Daten in die Zwischenspeicher (614, 622) abschalten kann, und zwar als Antwort auf ein Signal von dem Leerbytes-Identifizierer (510), dass ein Leerbyte identifiziert worden ist.

30. Kommunikationssystem nach Anspruch 29, wobei das Breitbandnetzwerk (550) ein 1-GB-Ethernet-Netzwerk ist.

31. Kommunikationssystem nach Anspruch 29, wobei das Nutzlast-Netzwerk (570) ein SONET-Netzwerk ist.

32. Kommunikationssystem nach Anspruch 31, wobei das SONET-Netzwerk aus der Gruppe ausgewählt wird, die OC1, OC3 und OC12 umfasst.

33. Kommunikationssystem nach Anspruch 29, weiterhin umfassend einen ersten Wandler (504), der ein Datenpaket im Format des Breitbandnetzwerks in die ersten Daten umwandeln kann.

34. Kommunikationssystem nach Anspruch 29, wobei jeder der Zwischenspeicher weiterhin umfasst:
einen Lesezeiger und einen Schreibzeiger (630);
wobei die Logikschaltung (520) weiterhin durch den Lesezeiger und den Schreibzeiger (630) gesteuert wird.

35. Kommunikationssystem nach Anspruch 29, wobei die ersten Daten in jeden der Zwischenspeicher mit einer Frequenz geschrieben werden können, die mit einer Taktfrequenz (512) des Breitbandnetzwerks übereinstimmt.

36. Kommunikationssystem nach Anspruch 29, weiterhin umfassend ein Platzhalterflag (624) in den Zwischenspeichern (614, 622) als Ersatz für die Leerbytes, wenn die Logikbrücke ein Schreiben der ersten Daten abschaltet.

37. Kommunikationssystem nach Anspruch 36, wobei die Nichtleerbytes und die Platzhalterflags (624) aus den Zwischenspeichern mit einer Frequenz ausgelesen werden können, die mit der Taktfrequenz (644) des Nutzlast-Netzwerks übereinstimmt.

38. Kommunikationssystem nach Anspruch 36, weiterhin umfassend einen zweiten Wandler (650, 652), der die Nichtleerbytes und die Platzhalterflags aus den Zwischenspeichern in ein Datenpaket mit einem Format für das Nutzlast-Netzwerk geringerer Bandbreite umwandeln kann.

39. Kommunikationssystem zum Umwandeln von Datenpaketen zwischen einem Nutzlast-Netzwerk (570) mit einem ersten und einem zweiten Kanal (702, 706) unterschiedlicher Prioritäten auf ein Breitbandnetzwerk (850) mit einer größeren Bandbreite als das Nutzlast-Netzwerk, umfassend:
Mittel zum Weiterleiten erster und zweiter Daten über den ersten bzw. den zweite Kanal (702, 706), wobei die ersten und zweite Daten Nichtleerbytes und Platzhalterflags aufweisen;
erste und zweite Zwischenspeicher (726, 732), in welche die ersten bzw. zweiten Daten geschrieben werden können;
einen Multiplexer (738), der mit dem ersten und dem zweiten Zwischenspeicher (726, 732) verbunden ist und der in der Lage ist, die ersten Daten von dem ersten Zwischenspeicher (726) oder die ersten und zweiten Daten von den Zwischenspeichern (726, 732) zu empfangen;
Mittel zum Ersetzen der Platzhalterflags durch Ersatzleerbytes.

40. Kommunikationssystem nach Anspruch 39, wobei das Breitbandnetzwerk (850) ein 1-GB-Ethernet-Netzwerk ist.

41. Kommunikationssystem nach Anspruch 39, wobei das Nutzlast-Netzwerk (570) ein SONET-Netzwerk ist.

42. Kommunikationssystem nach Anspruch 41, wobei das SONET-Netzwerk aus der Gruppe ausgewählt wird, die OC1, OC3 und OC12 umfasst.

43. Kommunikationssystem nach Anspruch 39, weiterhin umfassend einen ersten Wandler (704, 710, 708, 712), der ein Datenpaket in einem Format des Nutzlast-Netzwerks in die ersten Daten umwandeln kann.

44. Kommunikationssystem nach Anspruch 39, weiterhin umfassend einen zweiten Wandler (740, 742), der eine Ausgabe der Zwischenspeicher in ein Datenpaket in einem Format des Breitbandnetzwerks (850) umwandeln kann.

45. Kommunikationssystem nach Anspruch 39, wobei die ersten und zweiten Daten in den ersten und zweiten Zwischenspeicher (726, 732) mit einer Frequenz geschrieben werden können, die mit einer Taktfrequenz (762) des Nutzlast-Netzwerks übereinstimmt.

46. Kommunikationssystem nach Anspruch 39, wobei der erste und der zweite Zwischenspeicher (726, 732) die ersten und die zweiten Daten mit einer Frequenz schreiben können, die mit einer Taktfrequenz (764) des Breitbandnetzwerks übereinstimmt.

47. Kommunikationssystem nach Anspruch 39, weiterhin umfassen eine Logikschaltung (744), die eine Eingabe des Multiplexers von einem der zwei Zwischenspeicher zum anderen der zwei Zwischenspeicher umschalten kann, und zwar als Antwort auf ein Schaltflag, das an eine der ersten und zweiten Daten angehängt ist.

48. Verfahren nach Anspruch 1, weiterhin umfassend ein Nutzen des Kanals niedriger Priorität, wie gerade benötigt, zum Übermitteln der verringerten Daten während eines normalen Übertragens eines Verkehrs niedriger Priorität über den Kanal niedriger Priorität.

49. Verfahren nach Anspruch 16, weiterhin umfassend ein Empfangen eines Verkehrs niedriger Priorität vom Kanal niedriger Priorität, wann immer eine Kapazität des Kanals niedriger Priorität seine Übertragung erlaubt.

50. Kommunikationssystem nach Anspruch 29, weiterhin umfassend einen Multiplexer (618), der an einem seiner Eingänge mit dem Demultiplexer (610) und an seinem Ausgang mit einem der Zwischenspeicher (622) mit niedriger Priorität verbunden ist, wobei der Multiplexer daran angepasst ist, an seinem anderen Eingang einen Verkehr niedriger Priorität zu empfangen und ihn zum dem Zwischenspeicher niedriger Priorität immer dann zu übertragen, wenn Kapazität vorhanden ist.

51. System nach Anspruch 39, weiterhin umfassend einen Demultiplexer (728), der an seinem Eingang mit dem zweiten Kanal mit niedriger Priorität verbunden ist, sowie an einem seiner Ausgänge mit dem zweiten Zwischenspeicher (732) und an seinem anderen Ausgang mit einem Zwischenspeicher (736) für Verkehr niedriger Priorität, wobei der Demultiplexer dazu dient, einen Verkehr niedriger Priorität immer dann abzutrennen, wenn er über den zweiten Kanal übertragen wird.

## Revendications

1. Procédé de conversion d'un courant de données comportant une pluralité de paquets de données de réseau large bande et des octets libres intercalés entre eux, reçus depuis un réseau large bande (550) pour communication sur un réseau de charge utile (570) ayant une largeur de bande plus étroite que ledit réseau large bande, ledit réseau de charge utile comportant deux canaux, l'un d'entre eux ayant une haute priorité et l'autre ayant une basse priorité, le procédé comprenant :
la réception de premières données depuis un paquet de données du réseau large bande, provenant du réseau large bande ;
la détection d'octets libres qui suivent lesdites premières données ;
le retrait desdits octets libre desdites premières données, fournissant ainsi des données réduites ; et
la fourniture de façon sélective desdites données réduites à l'un ou à l'autre desdits deux canaux dudit réseau de charge utile, pour assurer la communication desdites données réduites par l'intermédiaire, soit du canal de haute priorité, soit, lorsque la capacité d'un tampon d'entrée du canal de haute priorité s'approche de ou atteint son seuil de charge, par l'intermédiaire desdits deux canaux.

2. Procédé selon la revendication 1, dans lequel ledit réseau large bande (550) est un réseau Ethernet à 1 Gb.

3. Procédé selon la revendication 1, dans lequel ledit réseau de charge utile (570) est un réseau SONET.

4. Procédé selon la revendication 3, dans lequel ledit réseau SONET est choisi dans le groupe formé par OC1, OC3 et OC12.

5. Procédé selon la revendication 1, dans lequel ledit paquet de données de réseau large bande est formaté conformément au protocole dudit réseau large bande.

6. Procédé selon la revendication 1, comprenant en outre :
la conversion dudit paquet de données de réseau large bande en un courant de données en série ;
l'identification des octets libres et des octets non libres dans ledit courant de données en série ;
l'écriture desdits octets non libres dans un premier tampon (614) dudit canal de haute priorité si de l'espace y est disponible ;
l'écriture desdits octets non libres dans un second tampon (622) dudit canal de basse priorité si aucun espace n'est disponible dans ledit premier tampon (614) ;
la fourniture en sortie de façon sélective desdits octets non libres depuis lesdits premier et second tampons ;
la conversion desdits octets non libres fournis en sortie en paquets de données respectifs de réseau de charge utile de largeur de bande étroite.

7. Procédé selon la revendication 6, comprenant en outre l'écriture d'un indicateur de maintien d'emplacement (624) dans lesdits premier et second tampons en remplacement d'un octet libre omis du courant de données mémorisé à l'intérieur.

8. Procédé selon la revendication 7, comprenant en outre un protocole GFP ou POS.

9. Procédé selon la revendication 7, comprenant en outre la fourniture en sortie dudit un indicateur de maintien (624) depuis ledit tampon.

10. Procédé selon la revendication 6, comprenant en outre l'écriture d'un indicateur de commutation (632) dans au moins l'un desdits premier et second tampons à chaque fois qu'un premier parmi deux courants de données en série successifs est écrit dans l'un des deux canaux et un deuxième des deux courant de données successifs est écrit dans un autre desdits deux canaux.

11. Procédé selon la revendication 6, dans lequel ladite étape d'identification desdits octets libres et desdits octets non libres s'effectue en réponse à un premier signal d'horloge, ledit premier signal d'horloge correspondant à la synchronisation dudit paquet de données de réseau large bande.

12. Procédé selon la revendication 6, dans lequel ladite étape d'écriture desdits octets non libres dans ledit tampon s'effectue en réponse à un premier signal d'horloge (512), ledit premier signal d'horloge correspondant à la synchronisation dudit paquet de données de réseau large bande.

13. Procédé selon la revendication 6, dans lequel ladite étape de conversion desdits octets non libres fournis en sortie en dits paquets de données de réseau de charge utile de largeur de bande étroite s'effectue en réponse à un signal d'horloge de réseau de charge utile (644).

14. Procédé selon la revendication 6, comprenant en outre la désérialisation desdits octets non libres fournis en sortie par l'un quelconque desdits tampons.

15. Procédé selon la revendication 6, comprenant en outre le formatage dudit paquet de données de réseau de charge utile de largeur de bande étroite conformément au protocole dudit réseau de charge utile.

16. Procédé pour convertir des paquets de données, reçus depuis un réseau de charge utile de largeur de bande étroite (570) comportant deux canaux (702, 706) de priorités différentes pour communication sur un réseau large bande (850) ayant une largeur de bande plus grande que ledit réseau de charge utile, comprenant :
la réception sélective des paquets de données de réseau de charge utile de largeur de bande étroite, comportant chacun des données, soit provenant de l'un (702) desdits deux canaux (702, 706) ayant une haute priorité soit depuis les deux desdits canaux (702, 706) ;
l'ajout d'un segment de données comprenant des octets libres aux données de chacun desdits paquets de données de réseau de charge utile de largeur de bande étroite, fournissant ainsi des données respectives améliorées ;
le séquencement des données améliorées respectivement en relation les unes avec les autres ; et
la fourniture desdites données améliorées audit réseau large bande (850).

17. Procédé selon la revendication 16, dans lequel ledit réseau large bande (850) est un réseau Ethernet à 1 Gb.

18. Procédé selon la revendication 16, dans lequel ledit réseau de charge utile (570) est un réseau SONET.

19. Procédé selon la revendication 18, dans lequel ledit réseau SONET est choisi dans le groupe constitué de OC1, OC3 et OC12.

20. Procédé selon la revendication 16, dans lequel ledit paquets de données de réseau de charge utile de largeur de bande étroite est formaté conformément au protocole dudit réseau de charge utile.

21. Procédé selon la revendication 20, dans lequel ledit protocole est un protocole GFP ou un protocole POS.

22. Procédé selon la revendication 16, comprenant en outre :
la conversion de chacun des paquets de données de réseau de charge utile de largeur de bande étroite en un courant de données en série comprenant des octets ;
l'identification desdites données en tant que premier segment de données dans chacun desdits courants de données en série ;
l'identification d'un indicateur de maintien d'emplacement de chacun desdits courants de données en série ;
le remplacement d'un second segment de données qui est le segment de données comprenant les octets libres dans chacun desdits courants de données en série en remplacement dudit indicateur de maintien d'emplacement ;
la conversion du courant de données en série obtenu en un paquet de données de réseau large bande correspondant.

23. Procédé selon la revendication 22, dans lequel ladite étape d'identification d'un premier segment de données s'effectue en réponse à un signal d'horloge de charge utile (762) correspondant à une synchronisation dudit réseau de charge utile.

24. Procédé selon la revendication 22, comprenant en outre l'écriture dudit premier segment de données dans un premier tampon (726).

25. Procédé selon la revendication 24, dans lequel ladite étape d'écriture dudit premier segment de données dans un tampon s'effectue en réponse à un signal d'horloge de charge utile (762) correspondant à la synchronisation dudit réseau de charge utile (570).

26. Procédé selon la revendication 24, dans lequel ladite étape de fourniture en sortie dudit premier segment de données depuis ledit tampon (726) s'effectue en réponse à un signal d'horloge large bande (764).

27. Procédé selon la revendication 22, comprenant en outre le formatage dudit paquet de données de réseau large bande conformément au protocole dudit réseau large bande (850).

28. Procédé selon les revendications 1 et 16, pour convertir un premier paquet de données de réseau large bande et un second paquet de données de réseau large bande depuis un format du réseau large bande (550) en un format du réseau de charge utile de largeur de bande étroite (570) pour transmission sur celui-ci et après cela, convertir en retour en un format d'un réseau large bande (850), comprenant :
la conversion dudit premier paquet de données de réseau large bande en un premier courant de données en série ;
l'identification des octets libres et des octets non libres dans ledit premier courant de données en série ;
l'écriture en séquence de façon sélective desdits octets non libres dudit premier courant de données dans l'un (614) des deux tampons (614, 622) ;
l'insertion d'un indicateur de maintien d'emplacement (624) dans ledit un (614) des deux tampons à un emplacement correspondant à un emplacement d'un octet libre suivant immédiatement ledit octet non libre ;
la conversion dudit second paquet de données de réseau large bande en un deuxième courant de données en série ;
l'identification des octets libres et des octets non libres dans ledit deuxième courant de données en série ;
l'écriture en séquence de façon sélective desdits octets non libres dudit deuxième courant de données en série dans un autre (622) des deux tampons ;
l'insertion d'un indicateur de maintien d'emplacement (624) dans un autre (622) des deux tampons à un emplacement correspondant à un emplacement d'un octet libre suivant immédiatement ledit octet non libre ;
l'insertion d'un indicateur de commutation (632) dans ledit un des deux tampons ;
la fourniture en sortie en série du contenu de chacun desdits deux tampons (614, 622) ;
la conversion dudit contenu fourni en sortie en paquets de données respectifs de réseau de charge utile de largeur de bande étroite ;
la conversion desdits paquets de données de réseau de charge utile de largeur de bande étroite en troisième courant de données respectif en série ;
l'écriture dudit troisième courant de données en série dans des tampons respectifs (726, 732) ;
l'identification desdits indicateurs de maintien d'emplacement dans chacun desdits troisièmes courants de données en série ;
le remplacement desdits indicateurs de maintien d'emplacement par des octets libres de remplacement ;
un nouveau séquencement desdits troisièmes courants de données en série respectifs en relation les avec les autres.

29. Système de communication pour convertir des paquets de données entre un réseau large bande (550) et un réseau de charge utile de largeur de bande plus étroite (570), ledit réseau de charge utile comportant deux canaux, l'un d'entre ayant une haute priorité et l'autre ayant une basse priorité, le système de communication comprenant :
des moyens pour fournir des premières données, lesdites premières données comportant des octets libres et des octets non libres ;
un identifiant d'octets libres (510) en communication avec ledit moyen pour fournir les premières données, ledit identifiant d'octets libres (510) servant à identifier les octets libres dans lesdites premières données ;
un démultiplexeur (610) connecté audit identifiant d'octets libres (510) et servant à recevoir des informations depuis ledit identifiant d'octets libres (510) ;
deux tampons (614, 622) connectés audit démultiplexeur (610), chaque tampon étant destiné à retenir des données destinées à être fournies à un canal respectif parmi les canaux de haute priorité et de basse priorité, dans lequel le démultiplexeur (610) est adapté à transmettre des données vers les tampons (614, 622) pour retenir les données destinées à être fournies soit au canal de haute priorité, soit, lorsque la capacité du tampon (614) du canal de haute priorité s'approche ou a atteint son seuil de charge, auxdits deux canaux ;
un circuit logique (520) connecté audit identifiant d'octets libres (510) et auxdits tampons (614, 622) pouvant désactiver l'écriture desdites premières données dans lesdits tampons (614, 622) en réponse à un signal provenant dudit identifiant d'octets (510) selon lequel un octet libre est identifié.

30. Système de communication selon la revendication 29, dans lequel ledit réseau large bande (550) est un réseau Ethernet à 1 Gb.

31. Système de communication selon la revendication 29, dans lequel ledit réseau de charge utile de largeur de bande plus étroit (570) est un réseau SONET.

32. Système de communication selon la revendication 31, dans lequel ledit réseau SONET est choisi dans le groupe constitué de OC1, OC3 et OC12.

33. Système de communication selon la revendication 29, comprenant en outre un premier convertisseur (504) pouvant convertir un paquet de données dans un format dudit réseau large bande vers lesdites premières données.

34. Système de communication selon la revendication 29, dans lequel chacun desdits tampons comprend en outre :
un pointeur de lecture et un pointeur d'écriture (630) ;
dans lequel ledit circuit logique (520) est contrôlé, en outre, par ledit pointeur de lecture et ledit pointeur d'écriture (630).

35. Système de communication selon la revendication 29, dans lequel lesdites premières données peuvent être écrites dans chacun desdits tampons à une vitesse correspondant à la vitesse d'horloge (512) dudit réseau large bande.

36. Système de communication selon la revendication 29, comprenant en outre un indicateur de maintien d'emplacement (624) dans lesdits tampons (614, 622) en remplacement desdits octets libres lorsque ladite porte logique désactive l'écriture desdites premières données.

37. Système de communication selon la revendication 36, dans lequel lesdits octets non libres et lesdits indicateurs de maintien d'emplacement (624) peuvent être lus depuis lesdits tampons à une vitesse correspondant à la vitesse d'horloge (644) dudit réseau de charge utile.

38. Système de communication selon la revendication 36, comprenant en outre un second convertisseur (650, 652) pouvant convertir lesdits octets non libres et lesdits indicateurs de maintien d'emplacement depuis lesdits tampons en un paquet de données dans un format pour ledit réseau de charge utile de largeur de bande plus étroite.

39. Système de communication pour convertir des paquets de données entre un réseau de charge utile (570), comportant un premier et un second canal (702, 706) de priorités différentes, vers un réseau large bande (850) ayant une plus grande largeur de bande que ledit réseau de charge utile, comprenant :
des moyens pour transmettre respectivement des premières et secondes données, par l'intermédiaire desdits premier et second canaux (702, 706), lesdites premières et secondes données comportant des octets non libres et des indicateurs de maintien d'emplacement ;
des premier et second tampons (726, 732) dans lesquels lesdites premières et secondes données peuvent être respectivement écrites ;
un multiplexeur (738) connecté auxdits premier et second tampons (726, 732) et capable de recevoir lesdites premières données depuis le premier tampon (726) ou lesdites premières et secondes données depuis les tampons (726, 732) ;
des moyens pour remplacer lesdits indicateurs de maintien d'emplacement par des octets libres de remplacement.

40. Système de communication selon la revendication 39, dans lequel ledit réseau large bande (850) est un réseau Ethernet à 1 Gb.

41. Système de communication selon la revendication 39, dans lequel ledit réseau de charge utile (570) est un réseau SONET.

42. Système de communication selon la revendication 41, dans lequel ledit réseau SONET est choisi dans le groupe constitué de : OC1, OC3 et OC12.

43. Système de communication selon la revendication 39, comprenant en outre un premier convertisseur (704, 710, 708, 712) qui peut convertir un paquet de données dans un format dudit réseau de charge utile vers lesdites premières données.

44. Système de communication selon la revendication 39, comprenant en outre un second convertisseur (740, 742) qui peut convertir une sortie dudit tampon en un paquet de données dans un format dudit réseau large bande (850).

45. Système de communication selon la revendication 39, dans lequel lesdites premières et secondes données peuvent être écrites dans lesdits premier et second tampons (726, 732) à une vitesse correspondant à la vitesse d'horloge (762) dudit réseau de charge utile.

46. Système de communication selon la revendication 39, dans lequel lesdits premier et second tampons (726, 732) peuvent écrire lesdites premières et secondes données à une vitesse correspondant à la vitesse d'horloge (764) dudit réseau large bande.

47. Système de communication selon la revendication 39, comprenant en outre un circuit logique (744) pouvant commuter une entrée dudit multiplexeur depuis l'un desdits deux tampons vers l'autre desdits deux tampons en réponse à un indicateur de commutation ajouté auxdites premières ou secondes données.

48. Procédé selon la revendication 1, comprenant en outre l'utilisation dudit canal de basse priorité selon les besoins pour transmettre lesdites données réduites, tout en transmettant normalement un trafic de basse priorité par l'intermédiaire dudit canal de basse priorité.

49. Procédé selon la revendication 16, comprenant en outre la réception d'un trafic de basse priorité depuis ledit canal de basse priorité, à chaque fois que la capacité dudit canal de basse priorité permet sa transmission.

50. Système de communication selon la revendication 29, comprenant en outre un multiplexeur (618) connecté à l'une de ses entrées audit démultiplexeur (610) et à sa sortie à l'un desdits tampons (622) ayant une basse priorité, le multiplexeur étant adapté à recevoir sur son autre entrée un trafic de basse priorité et à le transmettre audit tampon de basse priorité à chaque fois que la capacité et disponible.

51. Système selon la revendication 39, comprenant en outre un démultiplexeur (728) connecté sur son entrée audit second canal ayant une basse priorité, à l'une de ses sortie audit second tampon (732) et à l'autre de ses sorties à un tampon de trafic de basse priorité (736), ledit démultiplexeur servant à séparer un trafic de basse priorité à chaque fois qu'il est transmis par l'intermédiaire dudit second canal.
